# EUROPÄISCHE PATENTSCHRIFT

(11) **EP 1 666 137 B1**
(45) Veröffentlichungstag und Bekanntmachung des Hinweises auf die Patenterteilung: **20.08.2008**
(21) Anmeldenummer: 05023961.5
(22) Anmeldetag: 03.11.2005
(51) Int. Cl.: B01J 19/00, F28F 7/02

(54) **Mikrostrukturreaktor und Verfahren zur Durchführung exothermer und endothermer Gasphasenprozesse**
Microstructure reactor and process for carrying out exothermic and endothermic reactions in gaseous phase
Réacteur à microstructure et procédé pour réactions exothermiques et endothermiques en phase gazeuse

(30) Priorität: 10.11.2004 DE 102004054334
(43) Veröffentlichungstag der Anmeldung: 07.06.2006
(73) Patentinhaber: MAN DWE GmbH, 94469 Deggendorf (DE)
(72) Erfinder: Dachs, Josef Dr., 94469 Deggendorf (DE); Schuster, Wolfgang Dr., 94554 Moos (DE); Bank, Rolf Dr., 94469 Deggendorf (DE); Lehr, Manfred, 94469 Deggendorf (DE)
(74) Vertreter: Paustian, Othmar

(56) Entgegenhaltungen:
- EP-A- 1 329 258
- EP-A- 1 457 254
- WO-A-03/080233
- WO-A-20/04090451
- US-A1- 2003 111 216
- US-A1- 2004 033 455

## Beschreibung

Die Erfindung bezieht sich auf einen Mikrostrukturreaktor gemäß dem Oberbegriff von Anspruch 1. Die Erfin-dung bezieht sich auf ein Verfahren zum Betrieben eines solchen Mikrostrukturreaktors.

Mikrostrukturreaktoren weisen in der Regel schlitz- bzw. spaltförmige, in ihrer Geometrie dem jeweiligen Prozess angepasste Reaktionskanäle mit Spaltweiten im Mikrometerbereich bis hin zu wenigen Millimetern und zwischen den Reaktionskanälen liegende Wärmeträgerräume auf. Derartige Reaktoren haben ein großes Oberflächen/Volumen-Verhältnis und daher eine sehr große spezifische Wärmeübertragungsfläche. Dadurch können aus den Reaktionskanälen in die Wärmeträgerräume oder umgekehrt aus den Wärmeträgerräumen in die Reaktionskanäle größere Wärmeströme bei deutlich kleineren Temperaturdifferenzen übertragen werden als bei konventionellen Reaktoren, beispielsweise bei Röhrenreaktoren. Dieses Charakteristikum von Mikrostrukturreaktoren ermöglicht es z. B., exotherme Reaktionen mit so großen Konzentrationen durchzuführen, die mit konventionellen Reaktoren nicht durchführbar sind, weil die Temperaturdifferenz zwischen Reaktionsgas und Wärmeträger zu groß wird und daher der Reaktionsverlauf nicht mehr kontrolliert werden kann.

Mikrostrukturreaktoren sind daher auch für Hochtemperaturanwendungen interessant, d. h. für Reaktionen, die bei Temperaturen oberhalb von etwa 220°C, und üblicherweise bis zu 550°C, ablaufen. Die Reaktion kann eine Umwandlung eines einzigen Reaktionsgases sein oder aber eine Reaktion zwischen zwei oder mehr Reaktionsgasen oder eine katalytische Reaktion, wobei auch eine Katalysatormasse in die Reaktionskanäle eingebracht sein kann. Im folgenden soll der Begriff "Reaktionsgas" auch Reaktionsgasgemische umfassen.

Da in einem Mikrostrukturreaktor Reaktionen mit hohen Wärmeströmen angestrebt werden, können die Temperaturdifferenzen an Stellen mit hoher Reaktionsgeschwindigkeit bei nicht ausreichendem Wärmeübergang relativ hoch werden. Insbesondere bei exothermen Reaktionen wirkt sich dies negativ auf die Reaktionsführung aus, denn durch die erhöhte Temperatur der Trennwand wird die Reaktionsgeschwindigkeit an den Stellen erhöhter Temperatur und damit die Wärmestromdichte weiter gesteigert. Dieser Effekt hat die Ausbildung von unerwünschten Heißpunkten zur Folge, die ein vorzeitiges Altern des Katalysators sowie die Bildung von Nebenprodukten begünstigen und im schlimmsten Fall sogar ein Durchgehen der Reaktion bewirken können. Der Wärmeträger muss daher in der Lage sein, diese hohen Wärmeströme aufzunehmen oder abzuführen.

Für einen optimalen Betrieb eines Mikrostrukturreaktors, d. h. für eine optimale Produktqualität und Produktausbeute bei möglichst langer Lebensdauer des Mikrostrukturreaktors, ist außerdem ein im wesentlichen gleicher Reaktionsverlauf in allen Reaktionskanälen eine wesentliche Voraussetzung. Dieses wiederum setzt voraus, dass der Temperaturverlauf T_{W} der wärmeübertragenden Trennwände in Strömungsrichtung des Reaktionsgases in allen wärmeübertragenden Trennwänden möglichst gleich ist. Daher sollte in jeder Querschnittsebene durch den Mikrostrukturreaktor senkrecht zur Strömungsrichtung des Reaktionsgases eine homogene Temperaturverteilung in den Trennwänden vorhanden sein, d. h. die Beträge der Temperaturdifferenzen von Trennwand zu Trennwand senkrecht zur Strömungsrichtung des Reaktionsgases - im folgenden als senkrechte Temperaturdifferenzen ΔTₛ bezeichnet - sollen möglichst gering und idealerweise Null sein. Hierbei wiederum kommt der Strömung des Wärmeträgers, der die gewünschte Wärmemenge zuführen oder die anfallende Wärmemenge abführen soll, eine wichtige Rolle zu.

Aus der WO 2004/090451 A1 ist ein Lochplattensystem zur gleichmäßigen, aber getrennten Verteilung zweier Fluide in eine Vielzahl von jeweils benachbarten Kanälen bekannt, die in einer monolithischen Struktur ausgebildet sind. Die Lochplatten geben die Kanäle frei oder sperren diese für das erste oder das zweite Fluid. Die Lochmuster dieser Lochplatten sind über den gesamten Querschnitt des Monoliths gleichmäßig ausgebildet.

US 2003/0111216 A1 beschreibt einen Wärmetauscher, in dessen Eingangsbereich Prallplatten gehängt sind, um ein eintretendes Gas zu verteilen und so eine Blockade durch eine leicht blockierende Substanz in dem einströmenden Gas zu verhindern. Das eintretende Gas prallt auf die Prallplatten auf und strömt teilweise durch diese hindurch und teilweise an diesen vorbei.

Es ist bekannt, z. B. aus DE 100 42 746 A1, den Wärmeträger senkrecht zur Strömungsrichtung des Reaktionsgases durch entsprechend verlaufende rohrförmige Strömungskanäle zu führen. Eine derartige Strömungsführung des Wärmeträgers führt jedoch zu einem unerwünschten Temperaturgradienten in den Querschnittsebenen durch den Mikrostrukturreaktor quer zur Strömungsrichtung des Reaktionsgases. Dem kann nur durch entsprechend kurze Strömungskanäle für den Wärmeträger oder durch eine hohe Strömungsgeschwindigkeit des Wärmeträgers entgegen gewirkt werden, was jedoch konstruktive Beschränkungen bzw. einen hohen technischen Aufwand mit sich bringt.

Im unteren Temperaturbereich bis ca. 220°C ist als Wärmeträger Wasser noch wirtschaftlich einsetzbar. Aufgrund der günstigen Stoffdaten lassen sich mit Wasser relativ einfach hohe Wärmeübergangswerte und geringe Temperaturdifferenzen ΔTₛ erzielen. Die zur Verfügung stehenden Wärmeträger im Hochtemperaturbereich > = 220°C weisen in der Regel jedoch geringere Wärmekapazitäten und höhere Viskositäten auf, weshalb sich bei gleicher Umwälzmenge deutlich schlechtere Verhältnisse in Bezug auf die Temperaturdifferenzen ergeben.

Besonders hohe senkrechte Temperaturdifferenzen ΔT_{S} sind bei den bekannten Mikrostrukturreaktoren zwischen den Randbereichen und den inneren Bereichen vorhanden, da die Temperaturverhältnisse im Randbereich andere sind als im inneren Bereich aufgrund des Wegfalls eines benachbarten Reaktionskanals bzw. Wärmeträgerraums auf einer Seite.

Aus der DE 100 44 526 A1 ist ein Mikrostrukturreaktor der eingangs genannten Art bekannt, bei dem der Wärmeträger längs der Reaktionskanäle strömt. Die Wärmeträgerkanäle sind auf plattenförmigen Modulen ausgebildet und über jeweils eine eigene Zu- und Ableitung an den Wärmeträgerkreislauf angeschlossen. Diese Zu- und Ableitungen verlaufen zueinander parallel und werden in einem 90°-Bogen zu einem Seitenrand des Moduls geführt. Auch hier treten, insbesondere bei Hochtemperaturanwendungen und in den Randbereichen, senkrecht zur Strömungsrichtung des Reaktionsgases (und des Wärmeträgers) relativ hohe Temperaturdifferenzen ΔTₛ zwischen den einzelnen Wärmeträgerkanälen auf, die die Reaktionsführung nennenswert beeinträchtigen.

Das Problem der relativ großen senkrechten Temperaturdifferenzen ΔTₛ verschärft sich noch, wenn zur Ausnutzung zulässiger oder zur Einstellung vorgegebener paralleler Temperaturdifferenzen ΔTp zwischen Eintritt in die und Austritt aus den Wärmeträgerräumen mit möglichst geringen Wärmeträger-Umwälzmengen gefahren werden soll.

Der Erfindung liegt daher die Aufgabe zugrunde, einen gattungsgemäßen Mikrostrukturreaktor so zu verbessern, dass die senkrechten Temperaturdifferenzen ΔTₛ geringer werden, und dieses auch im Randbereich und bei möglichst geringen Umwälzmengen des Wärmeträgers.

Es soll auch ein geeignetes Verfahren zum Betreiben eines solchen Mikrostrukturreaktors vorgeschlagen werden, um über die gesamte Lebensdauer eines Mikrostrukturreaktors hinweg eine geringe senkrechte Temperaturdifferenz ΔTₛ zu gewährleisten.

Erfindungsgemäß wird die oben genannte Aufgabe bei einem Mikrostrukturreaktor der eingangs genannten Art durch die kennzeichnenden Merkmale des Anspruchs 1 gelöst.

Durch die erfindungsgemäßen Maßnahmen wird in einem Mikrostrukturreaktor eine äußerst homogene Temperaturverteilung senkrecht zu den Reaktionskanälen erreicht. Da in jedem Wärmeträgerkreislauf eine Vielzahl konstruktiv festgelegter Druckeinstelleinrichtungen angeordnet ist und dabei jedem einzelnen Wärmeträgerraum wenigstens eine Druckeinstelleinrichtung zugeordnet ist, mit der die Differenz zwischen dem Druck, mit dem der Wärmeträger in den Wärmeträgerraum eintritt, und dem Druck einstellbar ist, mit dem der Wärmeträger aus dem Wärmeträgerraum wieder austritt, ist in jedem Wärmeträgerraum eine individuell für diesen festgelegte Druckdifferenz vorhanden. Mit diesen individuellen Druckdifferenzen in den einzelnen Wärmeträgerräumen können die unterschiedlichen Drücke ausgeglichen werden, mit denen der Wärmeträger aufgrund der unterschiedlichen Strömungsverhältnisse, die auf dem Weg zu den Eintritten der jeweiligen Wärmeträgerräume unvermeidbar auftreten, an diesen Eintritten anliegt. Insbesondere treten diese unterschiedlichen Strömungsverhältnisse bei einer Zuleitung des Wärmeträgers quer zu den Wärmeträgerräumen auf, allein schon aufgrund der unterschiedlich langen Strömungswege bis zu den Eintritten in die Wärmeträgerräume. Erfindungsgemäß sind diese Druckdifferenzen so eingestellt, dass das Verhältnis der einen Wärmeträgerraum durchströmenden Wärmeträgermenge zu der Wärmemenge, die in diesen Wärmeträgerraum aus den an ihn angrenzenden Reaktionskanälen einströmt oder aus diesem Wärmeträgerraum in die an ihn angrenzenden Reaktionskanäle ausströmt, für alle Wärmeträgerräume in einem Wärmeträgerkreislauf gleich ist. Damit ist eine äußerst gleichmäßige Wärmezuführung oder - abführung über jede Querschnittsebene durch den Mikrostrukturreaktor senkrecht zur Strömungsrichtung des Reaktionsgases gewährleistet. Dies gilt auch bei großen parallelen Temperaturdifferenzen ΔTp, d.h. bei relativ geringen Wärmeträger-Umwälzmengen, und schließt insbesondere auch die Randbereiche des Mikrostrukturreaktors ein. Durch die erfindungsgemäßen Druckeinstelleinrichtungen können auch dort, wo die Wände der Reaktionskanäle und/oder der Wärmeträgerräume zumindest einseitig frei liegen und daher andere Wärmestromverhältnisse vorliegen als dort, wo Reaktionskanäle und Wärmeträgerräume allseitig an benachbarte Reaktionskanäle und/oder Wärmeträgerräume angrenzen, die Druckdifferenzen - und damit die Volumenströme des Wärmeträgers dem jeweils vorhandenen Wärmestrom ohne weiteres angepasst werden. Die bei den bekannten Mikrostrukturreaktoren vorhandenen Störeinflüsse aus solchen Randbereichen sind bei einem erfindungsgemäßen Mikrostrukturreaktor nicht vorhanden oder zumindest stark reduziert.

Bevorzugte Ausgestaltungen sind in den Unteransprüchen angegeben.

Erfindungsgemäß wird zum Betrieb eines Mikrostrukturreaktors vorgeschlagen, diesen bei seiner Inbetriebnahme vorzuwärmen, ehe er mit Wärmeträger, insbesondere mit flüssiger Salzschmelze, befüllt wird.

Wärmeträger für Hochtemperaturanwendungen können einen relativ hohen Schmelzpunkt aufweisen, bei üblicherweise verwendeten Salzen liegt er beispielsweise bei mindestens 142°C. Wenn flüssige Salzschmelze in einen kalten, d.h. nicht vorgewärmten, Mikrostrukturreaktor eingefüllt wird, besteht die Gefahr, dass die Salzschmelze in den kalten Wärmeträgerräumen erstarrt. Zwar nimmt das Volumen des Salzes beim Abkühlen bzw. Erstarren ab, jedoch kann es beim Wiedererwärmen in Wärmeträgerräumen mit geringen Spaltweiten zur einer ungleichmäßigen Erwärmung kommen, die aufgrund der damit verbundenen ungleichmäßigen Volumenvergrößerung zu Schäden in den Wärmeträgerräumen führt. Eine homogene Temperaturverteilung über den Querschnitt des Mikrostrukturreaktors senkrecht zur Strömungsrichtung des Reaktionsgases wäre dann nicht mehr möglich.

Aus dem selben Grund wird erfindungsgemäß vorgeschlagen, bei Außerbetriebnahme des Mikrostrukturreaktors, was auch eine unplanmäßige Unterbrechung eines Wärmeträgerkreislaufes einschließt, die Wärmeträgerräume zu entleeren. Ansonsten besteht wiederum die Gefahr, dass durch Erstarren und ungleichmäßiges Wiederaufheizen des Wärmeträgers die Wärmeträgerräume beschädigt werden.

Ferner wird noch vorgeschlagen, die entleerten Wärmeträgerräume mit Inertgas zu füllen, um die Wände der Wärmeträgerräume vor Beschädigungen durch Oxidation zu schützen.

Die Erfindung wird nachfolgend anhand der Zeichnungen beispielshalber noch näher erläutert. Es zeigen:
- Figur 1: eine Perspektivansicht eines teilweise aufgeschnittenen erfindungsgemäßen Mikrostrukturreaktors, mit einem ersten Ausführungsbeispiel für die WärmeträgerZuführung sowie die Ausbildung von Druckeinstelleinrichtungen und Wärmeträgerräumen;
- Figur 2: einen Längsschnitt durch den Mikrostrukturreaktor aus Figur 1, längs Linie II-II;
- Figur 3: Diagramme, in denen der Wärmestrom durch eine Trennwand sowie die Temperaturverläufe von Wärmeträger und Trennwand längs eines Reaktionskanals qualitativ dargestellt sind;
- Figur 4: eine Perspektivansicht eines erfindungsgemäßen Mikrostrukturreaktors, mit einem zweiten Ausführungsbeispiel für die Wärmeträger-Zuführung;

- Figur 5: einen Teil-Querschnitt durch den Mikrostrukturreaktor aus Figur 4, längs Linie V-V, in perspektivischer Darstellung;
- Figur 6: einen der Figur 5 ähnlichen Teil-Querschnitt durch den Wärmeträger-Zuführungsbereich eines erfindungsgemäßen Mikrostrukturreaktors, gemäß einem weiteren Ausführungsbeispiel;
- Figur 7: eine Perspektivansicht eines erfindungsgemäßen Mikrostrukturreaktors, mit einem dritten Ausführungsbeispiel für die Wärmeträger-Zuführung;
- Figur 8: einen Längsschnitt durch einen erfindungsgemäßen Mikrostrukturreaktor, mit einem zweiten Ausführungsbeispiel für die Ausbildung von Druckeinstelleinrichtungen und Wärmeträgerräumen;
- Figur 9: einen Längsschnitt durch einen erfindungsgemäßen Mikrostrukturreaktor, mit einem dritten Ausführungsbeispiel für die Ausbildung von Druckeinstelleinrichtungen und Wärmeträgerräumen;
- Figur 10: einen Längsschnitt durch einen erfindungsgemäßen Mikrostrukturreaktor, mit einem vierten Ausführungsbeispiel für die Ausbildung von Druckeinstelleinrichtungen und Wärmeträgerräumen;
- Figur 11: einen Längsschnitt durch einen erfindungsgemäßen Mikrostrukturreaktor, mit einem fünften Ausführungsbeispiel für die Ausbildung von Druckeinstelleinrichtungen und Wärmeträgerräumen;
- Figur 12: ein Fließbild eines Wärmeträgerkreislaufes gemäß einem ersten Ausführungsbeispiel;
- Figur 13: ein Fließbild eines Wärmeträgerkreislaufes gemäß einem zweiten Ausführungsbeispiel;

- Figur 14: eine Perspektivansicht eines erfindungsgemäßen Mikrostrukturreaktors, mit einem vierten Ausführungsbeispiel für die Wärmeträger-Zuführung;
- Figur 15: einen Längsschnitt durch den Mikrostrukturreaktor aus Figur 14, längs Linie XV-XV.

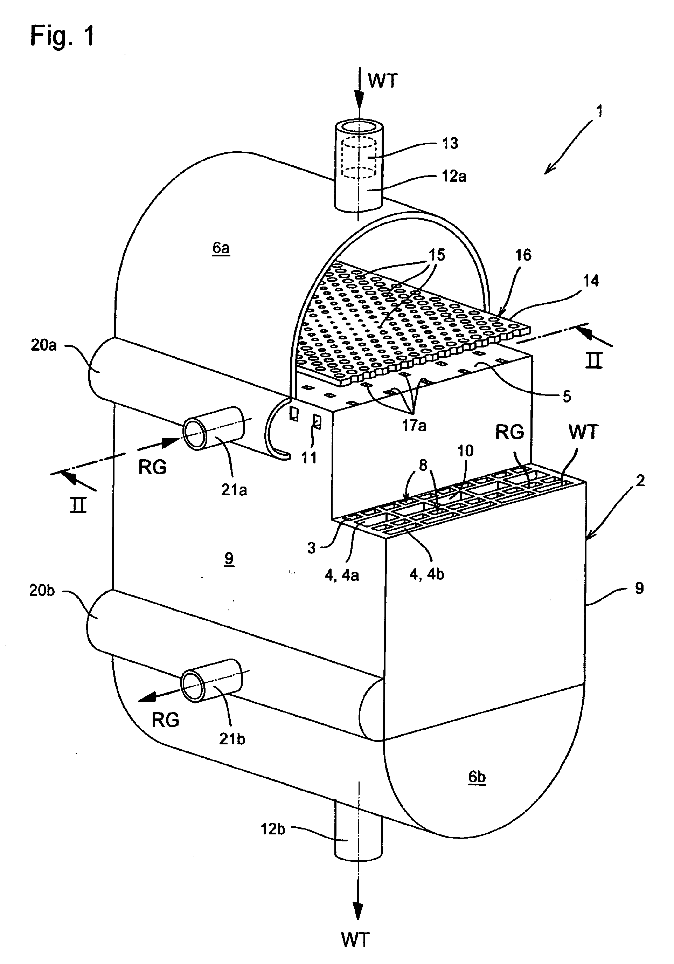

Die in den Figuren dargestellten Ausführungsbeispiele erfindungsgemäßer Mikrostrukturreaktoren 1 weisen ein quaderförmiges Mittelteil 2 mit einer Vielzahl von Reaktionskanälen 3 und Wärmeträgerräumen 4, 4a, 4b auf, die sich zwischen einander gegenüber liegenden Stirnseiten 5 des Mittelteils 2 erstrecken. Entweder die Reaktionskanäle 3 oder die Wärmeträgerräume 4 münden in die Stirnseiten 5. Auf der Eintrittsseite werden sie von einer Eintrittshaube und auf der Austrittsseite von einer Austrittshaube überspannt, z. B. 6a und 6b gemäß Figur 1 im Fall der Wärmeträgerräume 4.

Die Reaktionskanäle 3 sind spalt- oder schlitzförmig ausgebildet mit einer Spalt- bzw. Schlitzweite von üblicherweise 10 bis 2000 µm. Sie verlaufen zueinander parallel und sind in zueinander parallelen Reihen 8 angeordnet, die sich zwischen zwei einander gegenüberliegenden Längsseiten 9 des Mittelteils 2 erstrecken. Zwischen den Reaktionskanalreihen 8 sind jeweils Zwischenräume vorhanden, in denen die Wärmeträgerräume 4 ausgebildet sind. Von den Reaktionskanälen 3 sind sie durch wärmeübertragende Trennwände 10 getrennt.

Die geometrische Ausbildung der Wärmeträgerräume 4 ist von der der Reaktionskanäle 3 unabhängig. In den dargestellten Ausführungsbeispielen sind die Wärmeträgerräume 4 ebenfalls spalt- bzw. kanalförmig ausgebildet und liegen die Spaltweiten der Wärmeträgerräume 4 im Größenbereich der Spaltweiten der Reaktionskanäle 3. Die Spaltweiten der Wärmeträgerräume 4 können jedoch von den Spaltweiten der Reaktionskanäle 3 auch deutlich verschieden sein. So können beispielsweise die Spaltweiten der Reaktionskanäle 3 im Mikrometerbereich liegen, wohingegen die Spaltweiten der Wärmeträgerräume 4 im Millimeterbereich liegen. Insbesondere haben sich bei für Hochtemperaturanwendungen geeigneten Wärmeträgern WT, wie z. B. bei flüssiger Salzschmelze, Spaltweiten von wenigstens 1 mm als vorteilhaft erwiesen. Die Spaltbreite der Wärmeträgerräume 4 kann größer oder kleiner sein als die der Reaktionskanäle 3, oder aber genauso groß. Im in Figur 1 dargestellten Ausführungsbeispiel grenzen pro Seite jeweils zwei Reaktionskanäle 3 an den selben Wärmeträgerraum 4 an.

Die Querschnittsform der Wärmeträgerräume 4 und/oder der Reaktionskanäle 3 ist in keiner Weise eingeschränkt. Denkbar ist beispielsweise auch eine kreisförmige, ovale oder rechteckige Ausführung.

Die Trennwände 10 sind vorteilhafterweise aus einem Werkstoff gebildet, der eine möglichst geringe Foulingneigung aus der Bildung von Oxidschichten aufweist, um während der gesamten Lebensdauer des Mikrostrukturreaktors 1 eine hohe Wärmeübertragungskapazität zu gewährleisten, d. h. den Wärmeübergangskoeffizienten nicht zu beeinträchtigen.

Um bei Hochtemperaturanwendungen dickwandige Bauweisen zu vermeiden, werden bei erfindungsgemäßen Mikrostrukturreaktoren 1 vorzugsweise Wärmeträger WT eingesetzt, die keinen oder nur einen geringen Dampfdruck bei den entsprechenden Betriebstemperaturen aufweisen. Geeignet sind insbesondere Öle, ionische Flüssigkeiten und im oberen Temperaturbereich bis etwa 550°C, vor allem flüssige Salzschmelzen.

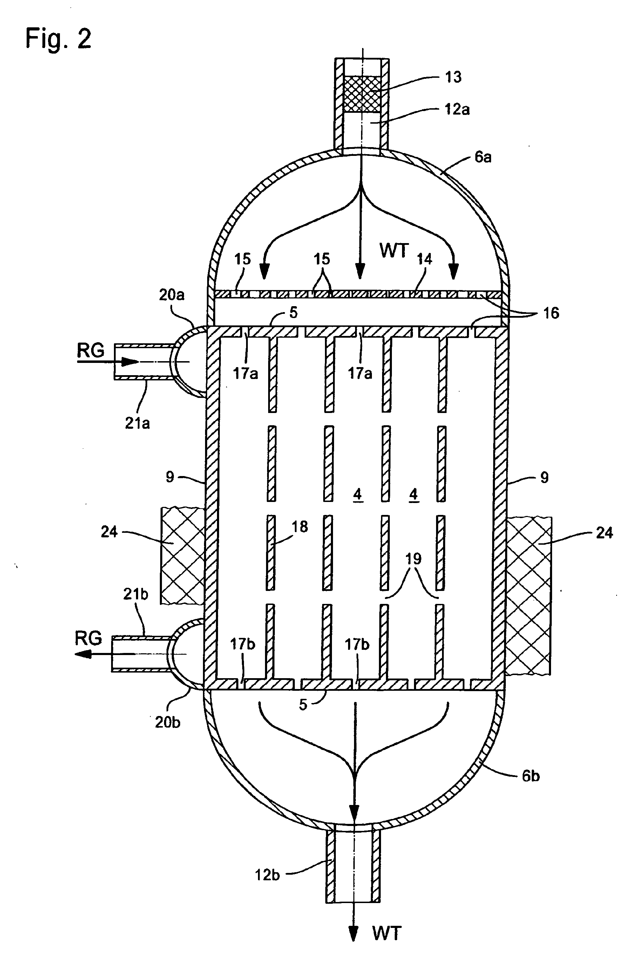

In dem in den Figuren 1 und 2 dargestellten Ausführungsbeispiel münden die Wärmeträgerräume 4 sowohl eintritts- als auch austrittsseitig in die Stirnseiten 5 des Mittelteils 2.

Die Reaktionskanäle 3 münden mit ihren Ein- und Austritten pro Reihe 8 jeweils in einen Reaktionsgas-Verteilerquerkanal bzw. in einen Reaktionsgas-Sammelquerkanal, die im Mittelteil 2 nahe den Stirnseiten 5 ausgebildet sind und ihrerseits quer zur Längsrichtung der Reaktionskanäle 3 mittels Einmündungen 11 in eine Längsseite des Mittelteils 2 münden.

Die Stirnseite 5 des Mittelteils 2 auf der Eintrittsseite des Wärmeträgers WT ist von einer Eintrittshaube 6a überspannt, die in etwa die Form eines Halbzylinders aufweist. Auf der Scheitellinie des Halbzylinders ist in der Mitte ein zylinderförmiger Eintrittsstutzen 12a angeordnet, in dem eine Vorrichtung 13 zur Reinigung des Wärmeträgers WT, beispielsweise ein Partikelfilter, angebracht ist. Diese Vorrichtung 13 reinigt den Wärmeträger WT zumindest von Partikeln, die größer sind als die Spaltweite der Wärmeträgerräume 4, um zu verhindern, dass Partikel sich in den Wärmeträgerräumen 4 absetzen und dort die Strömungsverhältnisse beeinträchtigen oder gar den betreffenden Wärmeträgerraum 4 verstopfen. Die Reinigung des Wärmeträgers WT kann auf jede geeignete Weise erfolgen. Beispielsweise ist auch eine chemische Reinigung oder der Einsatz einer Kühlfalle denkbar, um störende belagbildende Stoffe aus dem Wärmeträger WT zu entfernen.

In der Eintrittshaube 6a ist in einem vorgegebenen Abstand zur Stirnseite 5 des Mittelteils 2 eine Platte 14 mit unterschiedlich großen Bohrungen 15 angeordnet, die einen Teil von Druckeinstelleinrichtungen 16 ausbildet, mit denen in jedem Wärmeträgerraum 4 eine jeweils individuelle Druckdifferenz zwischen dem Eintritt des Wärmeträgers WT in den betreffenden Wärmeträgerraum 4 und dem Austritt des Wärmeträgers WT aus diesem Wärmeträgerraum 4 eingestellt ist. Die Bohrungsdurchmesser werden in Strömungsrichtung des Wärmeträgers WT, d. h. mit größer werdendem Abstand zum Eintrittsstutzen 6a, größer.

Einen weiteren Teil der Druckeinstelleinrichtungen 16 bilden die als Drosselöffnungen ausgebildeten Ein- und Austrittsquerschnitte 17a, 17b in den bzw. aus dem jeweiligen Wärmeträgerraum 4.

Gemeinsam bilden diese Druckeinstelleinrichtungen 16 in jedem Wärmeträgerraum 4 eine für diesen Wärmeträgerraum 4 individuell vorgegebene Druckdifferenz aus, die einen bestimmten Volumenstrom des Wärmeträgers WT durch diesen Wärmeträgerraum 4 zulässt. Die Druckeinstelleinrichtungen 16, d. h. die Bohrungen 15 in der Platte 14 sowie die Ein- und Austrittsöffnungen 17a, 17b der Wärmeträgerräume 4, sind jeweils so ausgebildet, dass in jedem Wärmeträgerraum 4 ein jeweils speziell eingestellter Volumenstrom des Wärmeträgers WT vorhanden ist, der ein für alle Wärmeträgerräume 4 gleich vorgegebenes Verhältnis zu dem speziellen Wärmestrom bewirkt, der zwischen dem Wärmeträgerraum 4 und allen an diesen angrenzenden Reaktionskanälen 3 strömt bzw. übertragen wird. Dabei ist es unerheblich, ob der Wärmestrom aus dem Wärmeträgerraum in die an ihn angrenzenden Reaktionskanäle 3 strömt - also eine endotherme Reaktion in den Reaktionskanälen 3 abläuft - oder ob der Wärmestrom aus den angrenzenden Reaktionskanälen 3 in den Wärmeträgerraum 4 strömt - also eine exotherme Reaktion in den Reaktionskanälen 3 abläuft.

Die Wärmeträgerräume 4 können untereinander in Strömungsverbindung stehen, um einen Druckausgleich in einer zur Strömungsrichtung des Reaktionsgases RG normale Ebene zu erreichen. Hierdurch werden aus Fertigungstoleranzen der Wärmeträgerräume 4 resultierende Abweichungen von den gewünschten bzw. planmäßig eingestellten Druckdifferenzen ausgeglichen. Ein Temperaturausgleich erfolgt auch, allerdings in lediglich beschränktem Ausmaß. Sind keine Fertigungstoleranzen vorhanden, haben diese Strömungsverbindungen in Bezug auf den Druckausgleich keine Wirkung. Gemäß der in Figur 2 dargestellten Ausführungsform weisen die die Wärmeträgerräume 4 untereinander trennenden Seitenwände 18 zur Ausbildung der Strömungsverbindungen kleine Durchbrechungen 19 auf.

Im folgenden wird angenommen, dass in den Reaktionskanälen 3 eine exotherme Reaktion abläuft.

Wie der Figur 1 zu entnehmen ist, sind die Wärmeträgerräume 4 in Richtung der Längsseiten 9 des Mittelteils 2 beidseitig von Reaktionskanälen 3 umgeben, bis auf die letzte Reihe Wärmeträgerräume 4b. Das bedeutet, dass in die innenliegenden Wärmeträgerräume 4a jeweils beidseitig, d. h. über beide Spaltbreitseiten, also von vier angrenzenden Reaktionskanälen 3, Wärme in die Wärmeträgerräume 4a strömt. Dagegen strömt in die letzte Reihe Wärmeträgerräume 4b in den beiden Randbereichen jeweils nur von einer Seite Wärme, also lediglich von zwei Reaktionskanälen 3, sodass dort andere Wärmeströme herrschen als in den innenliegenden Wärmeträgerräumen 4a. Wie in Figur 1 dargestellt, können die Wärmeträgerräume 4b in den Randbereichen im Hinblick auf den reduzierten Wärmestrom einen geringeren Durchströmungsquerschnitt aufweisen als die Wärmeträgerräume 4a im inneren Bereich.

Mit den erfindungsgemäßen Maßnahmen können diese ungleichen Wärmestromverhältnisse auf einfache Weise berücksichtigt werden, um die Größe der Temperaturdifferenz ΔTₛ in der Temperaturverteilung senkrecht zur Längsrichtung der Reaktionskanäle 3 bzw. der Strömungsrichtung des Reaktionsgases RG in den Randbereichen zu verringern oder gar vollständig zu beseitigen. Mit Hilfe der erfindungsgemäßen Druckeinstelleinrichtungen 16 können über entsprechend vorgegebene Druckdifferenzen in den Wärmeträgerräumen 4 des Randbereiches die Volumenströme des Wärmeträgers WT ohne weiteres so eingestellt werden, dass das vorgegebene Verhältnis zum Wärmestrom im wesentlichen erreicht wird.

Vorteilhafterweise ist der Mikrostrukturreaktor 1 von einer Isolierung 24 umschlossen, um insbesondere den Wärmeverlust in den Randbereichen zu minimieren.

Die Stirnseite 5 des Mittelteils 2 auf der Austrittsseite des Wärmeträgers WT wird von einer halbzylinderförmigen Austrittshaube 6b überspannt, in der der aus den Wärmeträgerräumen 4 austretende Wärmeträger WT gesammelt wird und aus der der Wärmeträger WT über einen Austrittsstutzen 12b abströmt. Der Austrittsstutzen 12b befindet sich ähnlich wie der Eintrittsstutzen 12a auf der Scheitellinie der Austrittshaube 6b in deren Mitte.

Die Eintrittsöffnungen 11 der Reaktionsgas-Verteilerquerkanäle und die Austrittsöffnungen der Reaktionsgas-Sammelquerkanäle an einer Längsseite 9 des Mittelteils 2 werden ebenfalls von einer halbzylinderförmigen Gas-Eintrittshaube 20a auf der Eintrittsseite bzw. von einer halbzylinderförmigen Gas-Austrittshaube 20b auf der Austrittsseite überspannt.

Die Zuleitung des Reaktionsgases RG erfolgt über einen Gas-Eintrittsstutzen 21 a, der auf der Scheitellinie der Gas-Eintrittshaube 20a in deren Mitte angeordnet ist. Das Reaktionsgas RG wird über die Reaktionsgas-Verteilerquerkanäle in die senkrecht verlaufenden Reaktionskanäle 3 verteilt. In den Reaktionskanälen 3 reagiert das Reaktionsgas RG, z. B. unter Einwirkung eines dort vorhandenen Katalysators, der beispielsweise als Beschichtung auf die Wandungen der Reaktionskanäle 3 aufgebracht sein kann.

Nach seinem Austritt aus den Reaktionskanälen 3 wird das Reaktionsgas RG in den Reaktionsgas-Sammelquerkanälen gesammelt und strömt in die Gas-Austrittshaube 20b. Die Ableitung des Reaktionsgases RG erfolgt über einen Gas-Austrittsstutzen 21 b, der auf der Scheitellinie der Gas-Austrittshaube 20a in deren Mitte angeordnet ist.

In dem in Figur 1 dargestellten Ausführungsbeispiel strömen das Reaktionsgas RG und der Wärmeträger WT im Gleichstrom durch das Mittelteil 2.

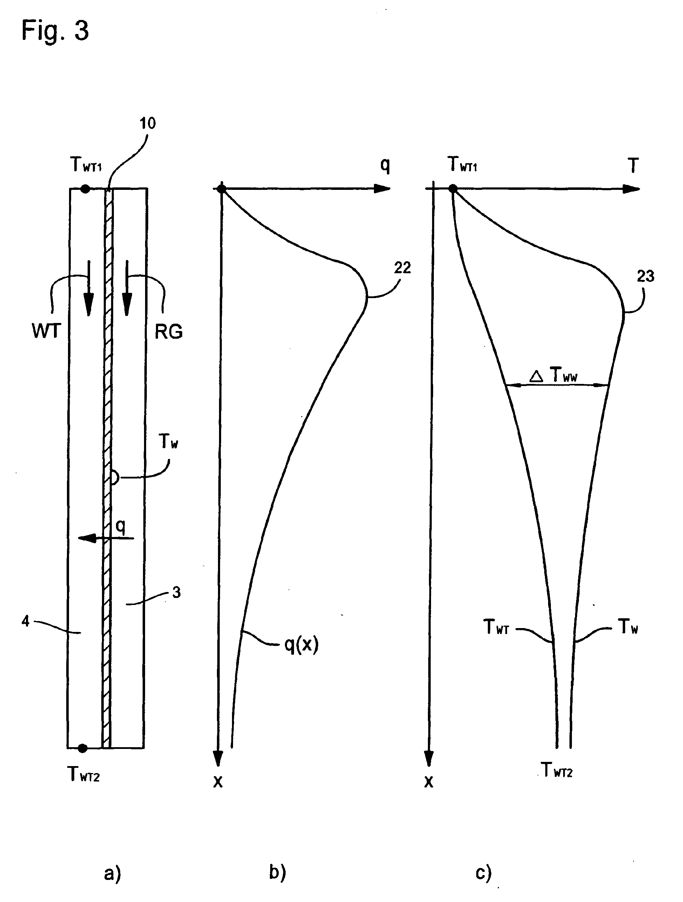

In Figur 3 ist am Beispiel einer exothermen Reaktion bei Gleichstrom der Verlauf der Wärmestromdichte, die von einem Reaktionskanal 3 durch die Trennwand 10 hindurch in den angrenzenden Wärmeträgerraum 4 übertragen werden soll, sowie der sich einstellende Temperaturverlauf im Wärmeträger WT (T_{WT}) und in der Trennwand 10 (T_{W}) dargestellt.

Figur 3a zeigt einen Ausschnitt eines Wärmeträgerraums 4 und eines an ihn angrenzenden Reaktionskanals 3, die durch eine Trennwand 10 voneinander getrennt sind. Der Wärmeträger WT und das Reaktionsgas RG strömen parallel zueinander im Gleichstrom in Figur 3a von oben nach unten.

Infolge der Reaktionswärme des Reaktionsgases RG entsteht durch die Trennwand 10 hindurch zum Wärmeträger WT ein Wärmestrom, mittels dem die Reaktionswärme zum Wärmeträger WT übertragen wird. Durch die Reaktionswärme ist somit der Wärmestrom festgelegt, der vom Wärmeträger WT aufgenommen werden muss, damit es zu keiner Überhitzung kommt. Der auf die Übertragungsfläche bezogene Wärmestrom ist die Wärmestromdichte q.

Im folgenden wird der Wärmeleitungswiderstand durch die Trennwand 10 hindurch vernachlässigt und angenommen, dass die Trennwandtemperatur über die Trennwanddicke konstant ist, d. h. die Trennwandtemperaturen auf der Reaktionsgasseite und auf der Wärmeträgerseite gleich sind.

In Figur 3b ist der Verlauf der Wärmestromdichte q in Abhängigkeit vom Strömungsweg x als q (x) aufgetragen. Im Anfangsbereich des Reaktionskanals 3 steigt die Reaktionsgeschwindigkeit und damit die Wärmestromdichte q im Verlaufe des Strömungsweges x bis zu einem Maximum 22 an. Ab dort nimmt die Konzentration der Reaktanten wieder ab und es kommt zu einer Verringerung der Reaktionswärme und damit des Wärmestroms bzw. der Wärmestromdichte q (x).

In Figur 3c ist der Verlauf der Wärmeträgertemperatur T_{WT} und der Verlauf der Trennwandtemperatur T_{W} dargestellt. Die Differenz ΔT_{WW} zwischen diesen beiden Temperaturen T_{W} und T_{WT} ist gleich dem Quotienten aus der Wärmestromdichte q(x) und dem wärmeträgerseitigen Wärmeübergangskoeffizienten α (bei Vernachlässigung des Wärmeleitungswiderstandes durch die Trennwand).

Wie aus der Figur 3c ersichtlich ist, nimmt die Trennwandtemperatur T_{W} ab dem Reaktionsgaseintritt mit der Zunahme der Wärmestromdichte q(x) zunächst zu bis zum Maximum, dem sogenannten Heißpunkt 23. Von dort an kommt es unter dem Einfluss der kühlenden Wirkung des Wärmeträgers WT zu einer zunächst relativ starken, im weiteren Verlauf geringer werdenden Absenkung der Trennwandtemperatur T_{W} und zu einer Verringerung der Differenz ΔT_{WW} zwischen der Trennwandtemperatur T_{W} und der Wärmeträgertemperatur T_{WT}. Die Wärmeträgertemperatur T_{WT} steigt im Bereich des Heißpunktes 23 relativ stark an. Nach diesem Bereich erhöht sich die Wärmeträgertemperatur T_{WT} in deutlich geringerem Maße und nähern sich Trennwandtemperatur T_{W} und Wärmeträgertemperatur T_{WT} bis auf eine geringe Differenz ΔT_{WW} aneinander an.

Entscheidend für eine optimale Reaktionsführung ist, dass in allen Reaktionskanälen 3 die gleichen Reaktionsbedingungen herrschen. Dieses erfordert, dass die Beträge der Temperaturdifferenzen ΔTₛ in Querschnittsebenen durch den Mikrostrukturreaktor 1 senkrecht zur Strömungsrichtung des Reaktionsgases RG bzw. zur Längsrichtung der Reaktionskanäle 3 möglichst klein sind und idealerweise zu Null werden, d. h. die Wandtemperaturprofile T_{W} aller Reaktionsgaskanäle im wesentlichen gleich sind. In diesem Zusammenhang werden als "im wesentlichen gleich" senkrechte Temperaturdifferenzen ΔTₛ angesehen, die die Reaktionsführung nicht mehr nennenswert beeinträchtigen. Die senkrechte Temperaturdifferenz ΔTₛ sollte kleiner als 10°C, bevorzugt kleiner als 5°C und besonders bevorzugt kleiner als 2°C sein.

Zusätzlich zur geeigneten Einstellung des Volumenstroms mittels der Druckeinstelleinrichtungen 16 können auch noch besondere Maßnahmen vorgesehen sein, um den wärmeträgerseitigen Wärmeübergangskoeffizienten α zu erhöhen. Solche Maßnahmen können in der Ausbildung einer Strukturierung der vom Wärmeträger WT angeströmten Oberflächen der Trennwände 10 bestehen. Diese Strukturierung kann durch Erhöhungen und Vertiefungen auf bzw. in der Oberfläche der Trennwände 10 - z. B. als Rillen - oder durch Erhöhen der Oberflächenrauhigkeit - z. B. durch Sandstrahlen - erfolgen.

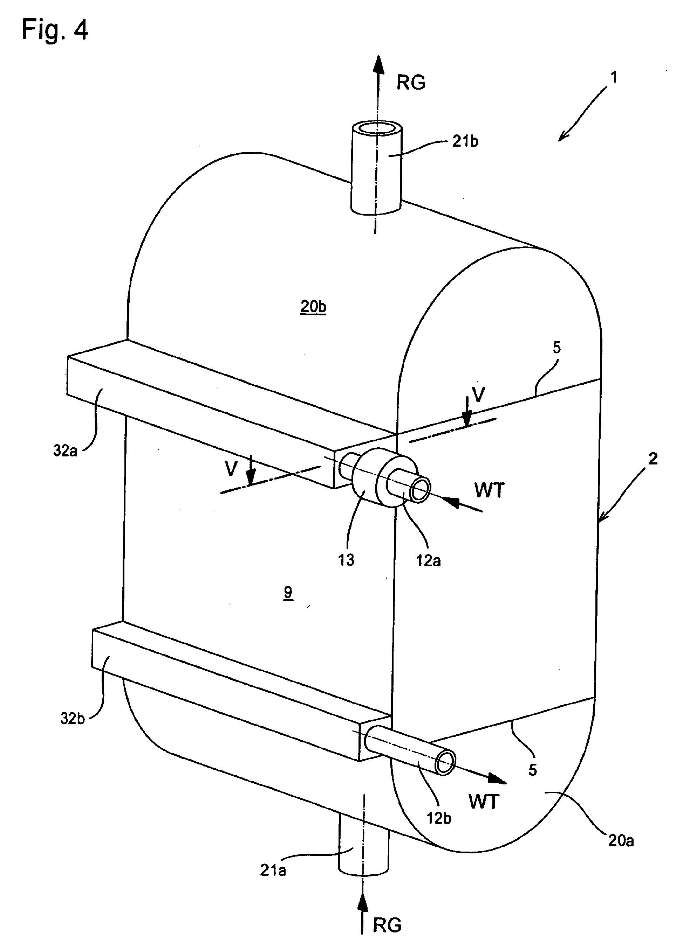

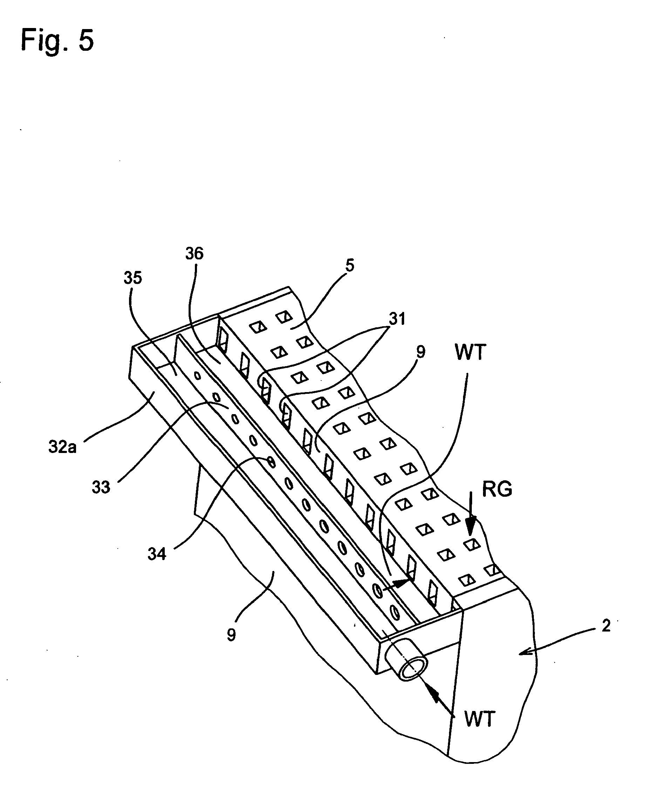

Bei dem in den Figuren 4 und 5 dargestellten Ausführungsbeispiel eines erfindungsgemäßen Mikrostrukturreaktors 1 erfolgt die Zu- und die Abführung des Reaktionsgases RG in Längsrichtung der Reaktionskanäle 3 an den Stirnseiten 5 des Mittelteils 2 und die Zu- und die Abführung des Wärmeträgers WT senkrecht zur Längsrichtung der Wärmeträgerräume 4 bzw. der Reaktionskanäle 3 an den Längsseiten 9.

Reaktionsgas RG und Wärmeträger WT strömen in diesem Beispiel im Gegenstrom durch das Mittelteil 2.

Die Reaktionskanäle 3 und Wärmeträgerräume 4 können bis auf die Eintritts- und die Austrittsbereiche wie diejenigen in dem Mikrostrukturreaktor 1 ausgebildet und angeordnet sein, der in den Figuren 1 und 2 dargestellt ist. Im Gegensatz zu dem dortigen Ausführungsbeispiel münden die Reaktionskanäle 3 hier in ihrer Längsrichtung in die Stirnseiten 5 des Mittelteils 2 und dort in eine Gas-Eintrittshaube 20a bzw. in eine Gas-Austrittshaube 20b.

Die Wärmeträgerräume 4 jeweils einer Reihe zwischen zwei Reaktionskanalreihen 8 münden in der Längsrichtung der Reaktionskanäle 3 eintrittsseitig in einen Wärmeträger-Verteilerquerkanal und austrittsseitig in einen Wärmeträger-Sammelquerkanal, die im Mittelteil 2 jeweils nahe einer Stirnseite 5 ausgebildet sind und sich senkrecht zur Längsrichtung der Reaktionskanäle 3 zwischen den Längsseiten 9 des Mittelteils 2 erstrecken.

Die Wärmeträger-Verteilerquerkanäle und die Wärmeträger-Sammelquerkanäle (im folgenden verkürzt lediglich als Verteiler- bzw. Sammelquerkanäle bezeichnet) münden mittels Öffnungen 31 ihrerseits in eine dieser Längsseiten 9 und dort in einen Verteilerlängskanal 32a auf der Eintrittsseite, wie in Figur 5 dargestellt, bzw. in einen Sammellängskanal 32b auf der Austrittsseite, die sich längs der Längsseite 9 erstrecken.

In dem Verteilerlängskanal 32a erstreckt sich in dessen Längsrichtung in einem vorgegebenen Abstand zu den Einmündungen 31 der Verteilerquerkanäle ein Materialstreifen 33 mit unterschiedlich großen Öffnungen 34. Der Materialstreifen 33 teilt den Verteilerlängskanal 32a in eine erste Kammer 35, in die hinein der Wärmeträger WT zugeführt wird, und in eine zweite Kammer 36, von der aus der Wärmeträger WT in die einzelnen Verteilerquerkanäle strömt. Von der ersten Kammer 35 kann der Wärmeträger WT ausschließlich durch die unterschiedlich großen Öffnungen 34 in die zweite Kammer 36 strömen. Dort strömt der Wärmeträger WT zu den Einmündungen 31 der Verteilerquerkanäle und in diesen weiter zu den Eintrittsöffnungen 17a der Wärmeträgerräume 4 und in diese hinein.

Ähnlich wie in Figur 1 ist unmittelbar vor Eintritt des Wärmeträgers WT in den Mikrostrukturreaktor 1 eine Vorrichtung 13 zur Reinigung des Wärmeträgers WT angeordnet.

Die erfindungsgemäßen Druckeinstelleinrichtungen 16 sind in diesem Fall durch die unterschiedlichen Öffnungsdurchmesser in dem Materialstreifen 33 sowie - wie bei dem in den Figuren 1 und 2 dargestellten Beispiel - durch die Eintritts- und die Austrittsöffnungen 17a, 17b in den bzw. aus dem jeweiligen Wärmeträgerraum 4 ausgebildet. Darüber hinaus können in dem Ausführungsbeispiel gemäß den Figuren 4 und 5 auch die Einmündungen 31 der Verteilerquerkanäle als Druckeinstelleinrichtungen 16 in Form von Drosselöffnungen ausgebildet sein. Dabei nehmen die Öffnungsdurchmesser in Strömungsrichtung des Wärmeträgers WT ab, um den ansteigenden statischen Druck auszugleichen. Dieses ermöglicht die Einstellung der jeweiligen Druckdifferenzen für die einzelnen Wärmeträgerräume 4 so, dass die jeweils gewünschten Volumenströme in die Wärmeträgerräume 4 strömen.

Zudem kann auf der Wärmeträger-Austrittsseite im Sammellängskanal 32b - ähnlich wie im Verteilerlängskanal 32a - ein Materialstreifen mit unterschiedlich großen Öffnungen als weitere Druckeinstelleinrichtung 16 angeordnet sein.

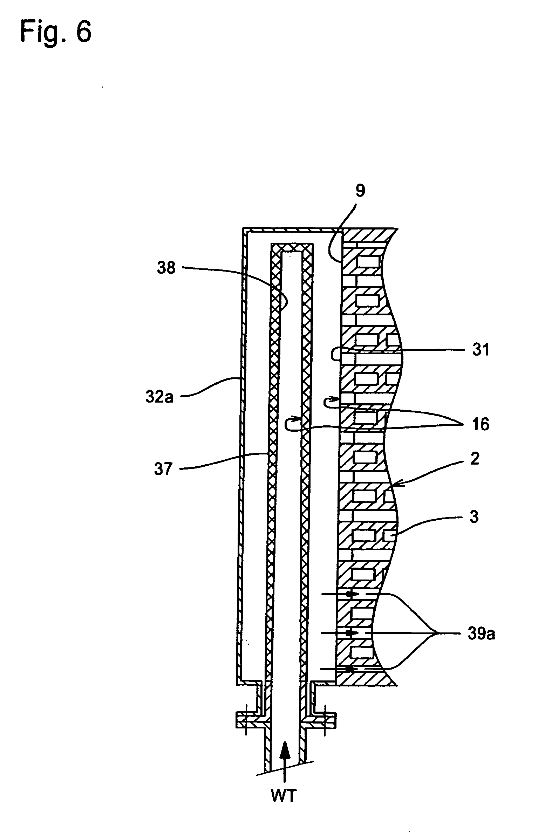

Figur 6 zeigt eine der Figur 5 ähnliche Darstellung. Bei diesem Ausführungsbeispiel mit ebenfalls einer Querzuführung des Wärmeträgers WT ist in dem Verteilerlängskanal 32a kein Materialstreifen mit Öffnungen vorgesehen, sondern ein rohrförmiger Hohlkörper 37 aus porösem Sintermetall.

Das Sintermetall hat offene Poren, die ein Hindurchströmen des Wärmeträgers WT erlauben. Die Druckeinstelleinrichtung 16 wird in diesem Ausführungsbeispiel durch die Formgebung der Innenwand 38 des Hohlkörpers 37 gebildet, die in Strömungsrichtung des Wärmeträgers WT leicht konisch verläuft. Dadurch verjüngt sich der Durchströmungsquerschnitt in Strömungsrichtung und erhöht sich gleichzeitig die Wanddicke, wodurch ein konstanter Druck außerhalb des Hohlkörper 37 eingestellt wird.

Aus dem Hohlkörper 37 strömt der Wärmeträger WT in den Verteilerlängskanal 32a und von diesem durch die Einmündungen 31 der Verteilerquerkanäle 39a in diese hinein.

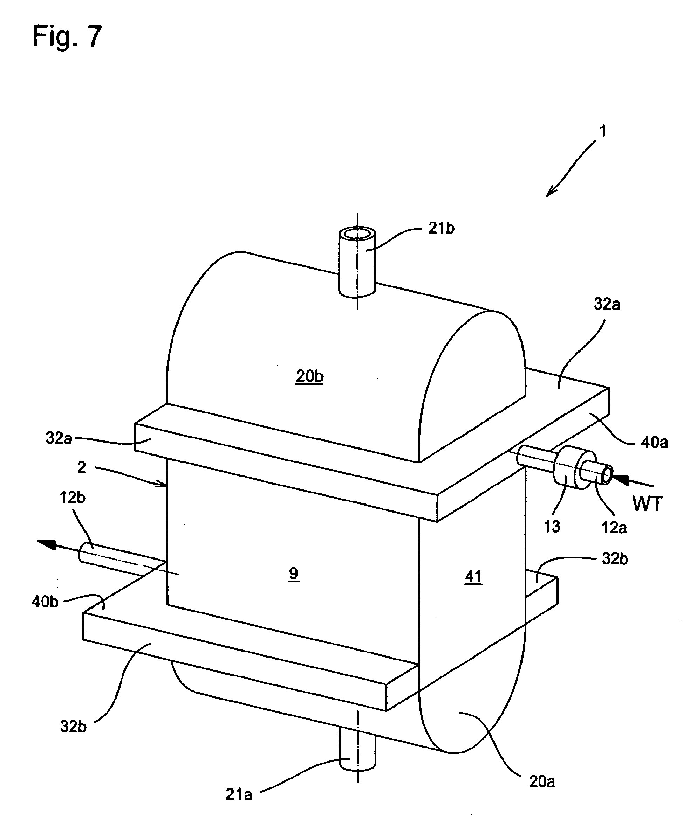

Bei dem in Figur 7 dargestellten Ausführungsbeispiel wird der Wärmeträger WT ebenfalls quer zur Längsrichtung der Reaktionskanäle 3 den Wärmeträgerräumen 4 zugeführt und aus diesen abgeleitet. In diesem Ausführungsbeispiel erfolgt die Zu- und Abführung des Wärmeträgers WT jedoch symmetrisch über beide Längsseiten 9 des Mittelteils 2. Zwei Wärmeträger-Verteilerlängskanäle 32a sowie zwei Wärmeträger-Sammellängskanäle 32b sind jeweils mittels eines querverlaufenden Verbindungskanals 40a, 40b U-förmig miteinander verbunden. Die beiden Verbindungskanäle 40a, 40b liegen jeweils an einer Querseite 41 des Mittelteils 2 an und weisen einen Eintritts- bzw. Austrittsstutzen 12a, 12b auf, über den der Wärmeträger WT zu- bzw. abgeführt wird.

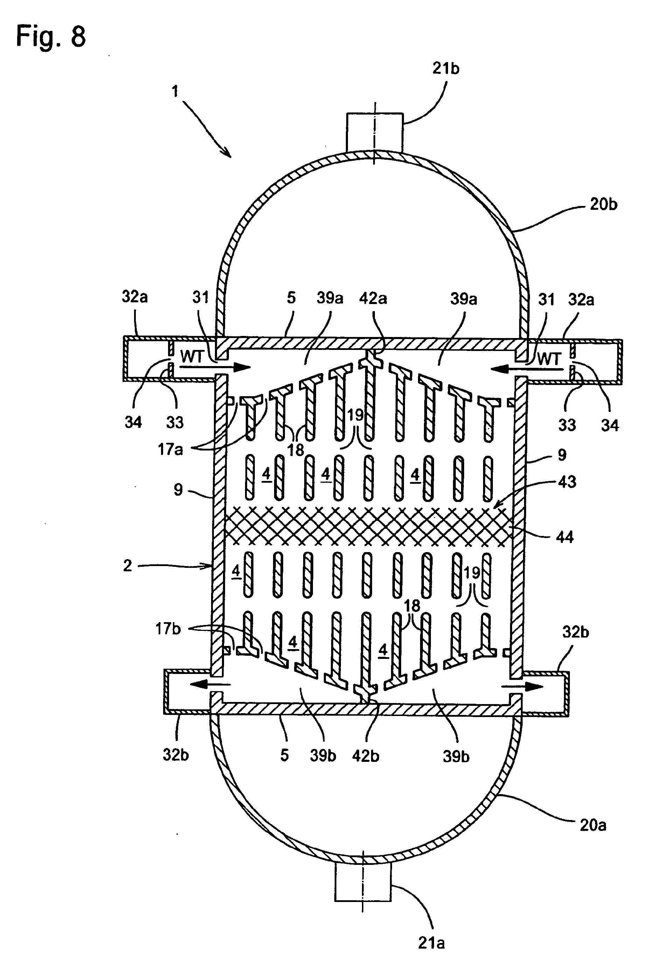

Die Figuren 8 bis 11 zeigen Längsschnitte durch erfindungsgemäße Mikrostrukturreaktoren 1 mit weiteren Ausführungsbeispielen für die Ausbildung und Anordnung von Druckeinstelleinrichtungen 16 und Wärmeträgerräumen 4 bei seitlicher Zu- und Abführung des Wärmeträgers WT. Die jeweils dargestellten Kombinationen von Druckeinstelleinrichtungen 16 und Wärmeträgerzu- und -abführungen sind lediglich beispielhaft angegeben und nicht als notwendige Kombination. Vielmehr ist die Art der seitlichen Wärmeträgerzu- und -abführung in keiner Weise beschränkt, insbesondere sind die dargestellten Lösungsprinzipien jeweils für einseitige und zweiseitige Zu- und Abführung verwendbar.

Die Längsschnitte in den Figuren 8 bis 11 zeigen jeweils einen Längsschnitt im Bereich der Wärmeträgerräume 4, sodass die Reaktionskanäle 3 in diesen Längsschnitten nicht dargestellt sind.

Bei dem in Figur 8 dargestellten Ausführungsbeispiel ist in den beiden Verteilerlängskanälen 32a jeweils ein Materialstreifen 33 mit Öffnungen 34 angeordnet, ähnlich wie in dem in Figur 5 dargestellten Ausführungsbeispiel. Zusätzlich zu den Eintritts- und den Austrittsöffnungen 17a, 17b der Wärmeträgerräume 4 sind hier noch die Strömungsquerschnitte der Verteilerquerkanäle 39a sowie die Länge der Wärmeträgerräume 4 als weitere Druckeinstelleinrichtungen 16 ausgebildet.

Die Strömungsquerschnitte der beiden Verteilerquerkanäle 39a verringern sich mit zunehmendem Abstand von ihrer Einmündung 31 in den jeweils zugehörigen Verteilerlängskanal 32a. Gleichzeitig verlängern sich die Wärmeträgerräume 4 und damit deren Durchströmungswege ebenfalls mit zunehmendem Abstand der Wärmeträgerräume 4 zum zugeordneten Verteilerlängskanal 32a, d. h. zu der Eintrittsöffnung 31 in der Längsseitenwand 9, an der dieser Verteilerlängskanal 32a befestigt ist.

Die beiden Verteilerquerkanäle 39a sind in Querrichtung in der Mitte durch einen Steg 42a flüssigkeitsdicht voneinander getrennt. Ebenso sind auf der Austrittsseite die beiden Sammelquerkanäle 39b in Querrichtung in der Mitte durch einen Steg 42b von einander flüssigkeitsdicht getrennt. Die Sammelquerkanäle 39b münden durch die Längsseitenwände 9 hindurch in jeweils einen Sammellängskanal 32b.

Wie bei dem Ausführungsbeispiel gemäß Figur 2 sind auch bei diesem Ausführungsbeispiel in den die Wärmeträgerräume 4 trennenden Seitenwänden 18 Durchbrechungen 19 ausgebildet, um einen Druckausgleich zwischen benachbarten Wärmeträgerräumen 4 zu ermöglichen.

Darüber hinaus ist bei diesem Ausführungsbeispiel auch noch ein Bereich 43 zur Quervermischung der in den einzelnen Wärmeträgerräumen 4 strömenden Wärmeträgerströme ausgebildet. Um eine effektive Quervermischung des Wärmeträgers WT zu gewährleisten, ist in diesem Bereich eine Mischeinrichtung 44 angeordnet. Diese besteht im dargestellten Ausführungsbeispiel aus kreuzförmig angeordneten Strömungsleiteinrichtungen. Jedoch kann hier jede geeignete Mischeinrichtung eingesetzt werden.

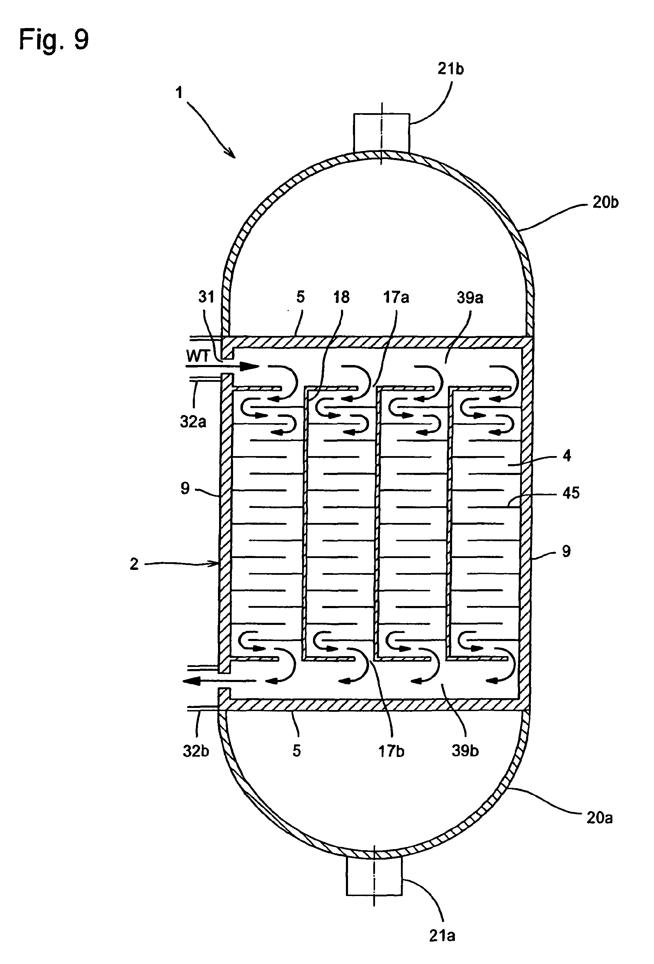

Bei dem in Figur 9 dargestellten Ausführungsbeispiel eines erfindungsgemäßen Mikrostrukturreaktors 1 sind in den Wärmeträgerräumen 4 jeweils senkrecht zur Längsrichtung der Reaktionskanäle 3 liegende Umlenkeinrichtungen 45 angeordnet, die dem Wärmeträger WT auf seinem Weg längs der Reaktionskanäle 3 eine Querstromkomponente aufprägen. Hierdurch wird die Homogenität der senkrechten Temperaturverteilung weiter verbessert. Darüber hinaus können die Abstände der Umlenkeinrichtungen 45 zueinander und zu den Seitenwänden 18 der Wärmeträgerräume 4 so gewählt werden, dass sie den Durchströmungsquerschnitt auf ein vorgegebenes Maß reduzieren und somit als Drosseln, d. h. als Druckeinstelleinrichtungen 16, wirken.

Der Wärmeträger WT wird in dem in Figur 9 dargestellten Ausführungsbeispiel einseitig zugeführt. Die Eintritts- und die Austrittsöffnungen 17a, 17b der Wärmeträgerräume 4 sind in der Weise unterschiedlich ausgebildet, dass sich ihre Querschnitte mit zunehmendem Abstand von dem Eintritt 31 des Wärmeträgers WT in den Verteilerquerkanal 39a entsprechend dem zunehmenden statischen Druck verkleinern, um die für die einzelnen Wärmeträgerräume 4 jeweils gewünschten Druckdifferenzen einzustellen. Die Zuführung des Wärmeträgers WT zum Verteilerquerkanal 39a kann wie in dem in Figur 4 dargestellten Ausführungsbeispiel erfolgen.

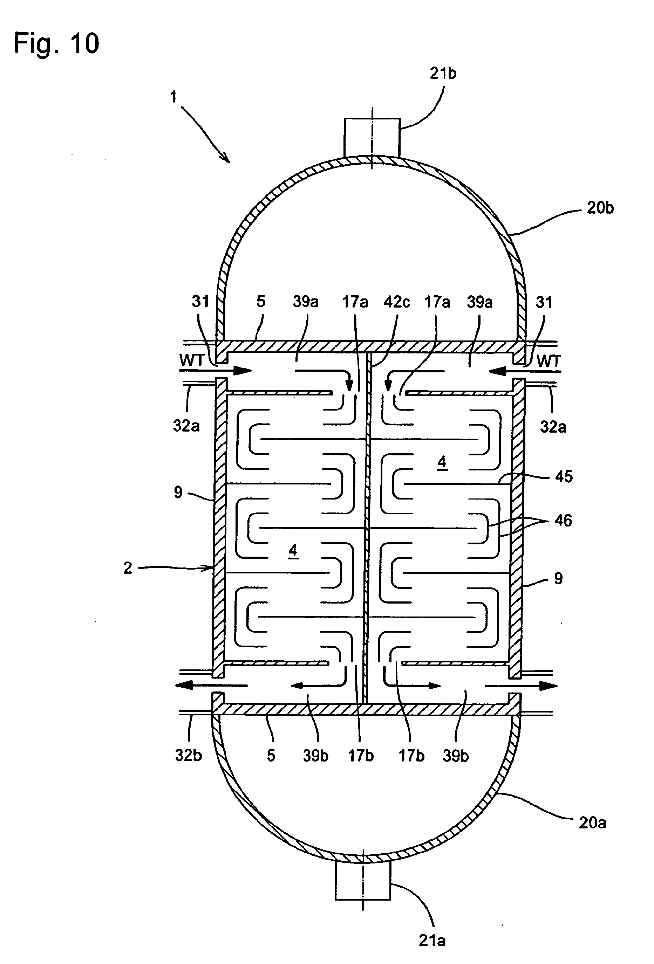

In Figur 10 ist ein ähnliches Ausführungsbeispiel wie in Figur 9 dargestellt, jedoch mit beidseitiger Wärmeträgerzu- und abführung. In diesem Beispiel erstreckt sich ein Wärmeträgerraum 4 über die halbe Breite bzw. Querseite 41 des Mittelteils 2. Die beiden Wärmeträgerräume 4 sind zueinander symmetrisch ausgebildet, wobei in der Symmetrieachse ein Schott 42c angeordnet ist, das die beiden Wärmeträgerräume 4 flüssigkeitsdicht voneinander trennt.

Der Abstand zwischen den Umlenkeinrichtungen 45 ist relativ groß, weshalb in den Umlenkbereichen noch zusätzlich Strömungsleiteinrichtungen 46 angeordnet sind, um den Wärmeträger WT auch in den Umlenkbereichen über den gesamten Strömungsquerschnitt möglichst gleichmäßig um die Umlenkeinrichtung 45 herum zu führen. Die Zuführung des Wärmeträgers WT zu den beiden Verteilerquerkanälen 39a kann wie bei dem in Figur 7 dargestellten Ausführungsbeispiel erfolgen.

In den Wärmeträgerräumen 4 können auch Einbauten 47 zur Verbesserung des Wärmeübergangs von der Trennwand 10 zum Wärmeträger WT angeordnet sein. Sie erzeugen Turbulenzen im Wärmeträgerstrom und / oder vergrößern die Wärmeübertragungsfläche. In jedem Fall dienen sie zur Erhöhung des wärmeträgerseitigen Wärmeübergangskoeffizienten α.

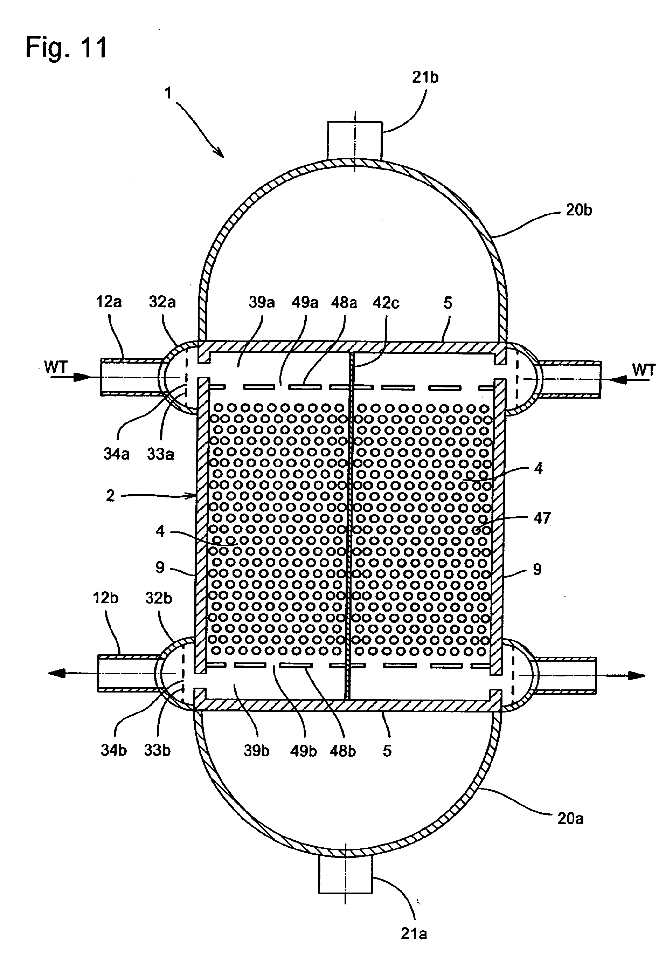

Die Einbauten können beispielsweise an der Trennwand 10 befestigte stift- oder noppenartige Elemente 47 sein. Ein Beispiel für die Anordnung solcher Einbauten ist in Figur 11 dargestellt. Die Einbauten können jedoch auch auf jede andere Art im Wärmeträgerraum 4 angebracht sein.

Zudem können die Trennwände 10 selbst Strukturierungen, wie z. B. Oberflächenrauhigkeit oder Erhebungen und Vertiefungen, aufweisen.

Bei dem Ausführungsbeispiel gemäß Figur 11 sind die stift- bzw. noppenartigen Elemente 47 in der Nähe der Seitenwände enger gestellt als im ungestörten Bereich, um einer erhöhten Randgängigkeit entgegen zu wirken.

Die Wärmeträgerräume 4 erstrecken sich wie bei dem Ausführungsbeispiel gemäß Figur 10 über die halbe Querseite 41 des Mittelteils 2. Die Zu- und die Abführung des Wärmeträgers WT erfolgt wie bei den in den Figuren 8 und 10 dargestellten Ausführungsbeispielen.

In den Verteilerquerkanälen 39a und in den Sammelquerkanälen 39b ist jeweils ein Steg 48a bzw. 48b angeordnet, der Öffnungen 49a bzw. 49b aufweist und in Längsrichtung der Reaktionskanäle 3 in einem vorgegebenen Abstand von den Einbauten 47 angeordnet sind und sich über die gesamte Breite des Wärmeträgerraums 4 erstreckt.

Ferner sind in beiden Verteilerlängskanälen 32a und in beiden Sammellängskanälen 32b Materialstreifen 33a, 33b mit Öffnungen 34a, 34b angeordnet, ähnlich wie in Figur 8 bei den dort dargestellten Verteilerlängskanälen 32a.

Die lichten Querschnitte aller Öffnungen 34a, 34b, 49a, 49b sind jeweils so ausgelegt, dass sich in den einzelnen Wärmeträgerräumen 4 die jeweils notwendige Druckdifferenz zwischen Eintritt 49a und Austritt 49b des Wärmeträgers WT einstellt, um im wesentlichen gleiche Verhältnisse von Volumenstrom zu Wärmestrom zu erzielen.

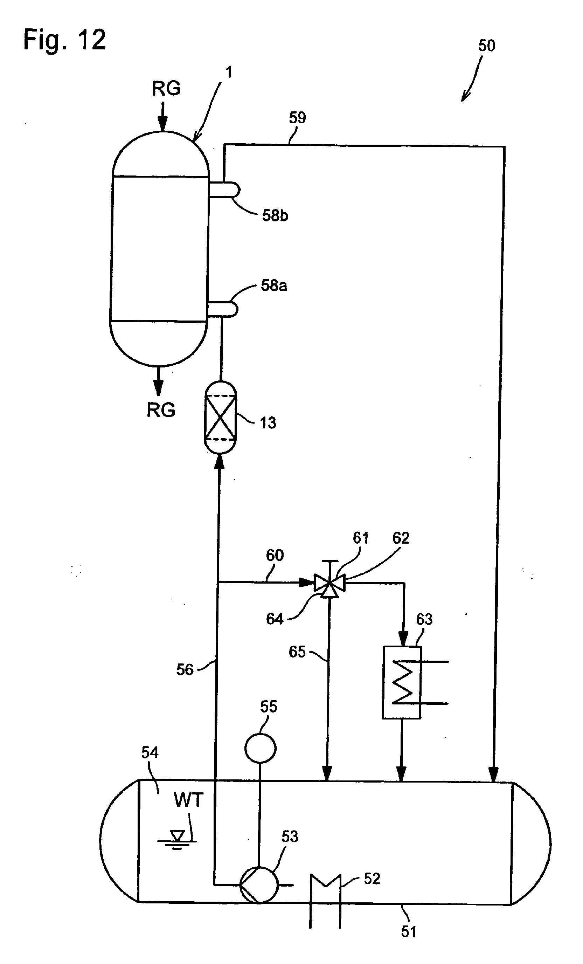

Figur 12 zeigt ein Fließbild mit einem ersten Ausführungsbeispiel für eine Verschaltung der Wärmeträgerleitungen außerhalb eines erfindungsgemäßen Mikrostrukturreaktors 1 zu einem Wärmeträgerkreislauf 50.

Der Wärmeträger WT befindet sich in einem Wärmeträgerbehälter 51, in dem eine Heizung 52 und eine Pumpe 53 angeordnet sind. Der Wärmeträgerbehälter 51 ist an der tiefsten Stelle im Wärmeträgerkreislauf 50 angeordnet und dient auch als Auffangbehälter. Sein Volumen entspricht daher mindestens dem gesamten für den Kreislauf 50 erforderlichen Wärmeträgervolumen, bzw. im Betrieb entspricht das Leervolumen 54 über dem Pegel des Wärmeträgers WT im Wärmeträgerbehälter 51 mindestens dem Volumen des im Kreislauf 50 befindlichen Wärmeträgers WT. Um eine Zersetzung oder Alterung des Wärmeträgers WT zu verhindern oder zu verlangsamen, ist der Wärmeträger WT im Wärmeträgerbehälter 51 mit Inertgas abgedeckt, d.h. das Leervolumen 54 mit Inertgas gefüllt.

Die Heizung 52 ist außerhalb des Wärmeträgerbehälters 51 an eine Energieversorgung angeschlossen. Die Pumpe 53 wird von einem Antriebsmotor 55 angetrieben, der sich außerhalb des Wärmeträgerbehälters 51 befindet. Durch diese räumliche Trennung von Pumpe 53 und Antriebsmotor 55 entfallen Dichtungsprobleme, die bei beweglichen Teilen, z. B. bei der Antriebswelle, bei hohen Betriebstemperaturen auftreten. Jede geeignete Pumpe kann eingesetzt werden, jedoch wird eine vertikale Kreiselpumpe bevorzugt.

Bei Inbetriebnahme wird der Wärmeträger WT in dem Wärmeträgerbehälter 51 zunächst durch die Heizung 52 erhitzt. Ist der Wärmeträger WT Salz, so wird dieses bei Inbetriebnahme durch das Heizen zunächst aufgeschmolzen. Anschließend wird der Wärmeträger WT durch die Pumpe 53 über eine Zulaufleitung 56 zu einer Reinigungsvorrichtung 13, die z. B. als Partikelfilter ausgebildet sein kann, gefördert. Diese Reinigungsvorrichtung 13 befindet sich nahe und vorteilhafterweise unmittelbar vor dem Eintritt 58a des Wärmeträgers WT in den Mikrostrukturreaktor 1.

Die Vorrichtung 13 zur Reinigung des Wärmeträgers WT sollte bei einer den Wärmeträgerräumen 4 vorgeschalteten Druckeinstelleinrichtung 16 vor dieser angeordnet sein, bei einer den Wärmeträgerräumen 4 nachgeschalteten Druckeinstelleinrichtung 16 sollte sie vorzugsweise vor dem Eintritt 17a in die Wärmeträgerräume 4 angeordnet sein.

Nachdem der Wärmeträger WT den Mikrostrukturreaktor 1 durchströmt hat, fließt er durch einen Austritt 58b über eine Rücklaufleitung 59 in den Wärmeträgerbehälter 51 zurück.

Wird im Mikrostrukturreaktor 1 eine endotherme Reaktion durchgerührt, gibt der Wärmeträger WT Wärme ab, die ihm im Wärmeträgerbehälter 51 durch die Heizung 52 wieder zugeführt wird, ehe er über die Zulaufleitung 56 erneut zur Reinigungsvorrichtung 13 und zum Mikrostrukturreaktor 1 gefördert wird.

Wird im Mikrostrukturreaktor 1 eine exotherme Reaktion durchgeführt, durchläuft der Wärmeträger WT eine Bypassleitung 60 zum Mikrostrukturreaktor 1, die zwischen dem Wärmeträgerbehälter 51 und der Reinigungsvorrichtung 13 von der Zulaufleitung 56 abzweigt. Die Bypassleitung 60 führt zu einem Dreiwege-Regelventil 61. Ein erster Ausgang 62 des Dreiwege-Regelventils 61 ist mit dem Eingang eines Kühlers 63 verbunden, dessen Ausgang mit dem Wärmeträgerbehälter 51 verbunden ist. Der Kühler 63 ist bevorzugt als Verdampfungskühler ausgebildet.

Der zweite Ausgang 64 des Dreiwege-Regelventils 61 ist über eine Kühler-Bypassleitung 65 direkt mit dem Wärmeträgerbehälter 51 verbunden.

Durch das Dreiwege-Regelventil 61 wird die die Bypassleitung 60 durchströmende und anschließend den Kühler durchströmende und / oder direkt in den Wärmeträgerbehälter 51 strömende Wärmeträgermenge eingestellt. Das Dreiwege-Regelventil 61 hat den Vorteil, dass zwar die Kühlleistung in dem Wärmeträgerkreislauf 50 veränderlich ist, nicht jedoch der Wärmeträger-Gesamtstrom. Die Strömungsbedingungen im Mikrostrukturreaktor 1 können auf diese Weise konstant gehalten werden. Die Temperatur-Regelung wird durch ein (nicht dargestelltes) Mess-Steuerungs-Regelungssystem durchgeführt.

Aus wirtschaftlichen Gründen sollte mit möglichst geringen Umwälzmengen des Wärmeträgers WT gefahren werden. Dadurch können die Pumpenleistung und die Zu- und Abführleitungsquerschnitte minimiert werden.

Wird der Mikrostrukturreaktor 1 außer Betrieb genommen, beispielsweise für Wartungsarbeiten oder bei einem Störfall, so wird der Mikrostrukturreaktor 1 - zumindest bei der Verwendung von Salz als Wärmeträger WT - vollständig entleert. Beim Abkühlen und Erstarren nimmt das Volumen des Salzes zwar ab, jedoch kann es beim Aufheizen wegen der engen und möglicherweise verwundenen Strömungswege in den Wärmeträgerräumen 4 zu einer ungleichen Erwärmung kommen, wodurch der Mikrostrukturreaktor 1 beschädigt werden kann.

In dem in Figur 12 dargestellten Wärmeträgerkreislauf 50 kann der Wärmeträger WT bei abgeschalteter Pumpe 53 durch die Reinigungsvorrichtung 13, die Zulaufleitung 56 und die Bypassleitung 60 in den Wärmeträgerbehälter 51 ablaufen.

Vorteilhafterweise sollten sich die Wärmeträgerräume 4 selbständig und vollständig entleeren. Im Wärmeträgerkreislauf 50 sind (nicht dargestellte) Be- und Entlüftungsvorrichtungen vorhanden, die ein selbständiges Entleeren ermöglichen. Die charakteristischen bzw. lichten Spaltweiten der Wärmeträgerräume bzw. -kanäle 4 dürfen bei einer Entleerung mittels Schwerkraft einen durch die Haftbedingung des verwendeten Wärmeträgers WT an den Wänden der Wärmeträgerräume 4 bedingten Wert nicht unterschreiten. Anstatt durch Schwerkraft kann die Entleerung der Wärmeträgerräume 4 auch über einen Gasstrom, vorzugsweise Inertgas, mit entsprechendem Druck erfolgen.

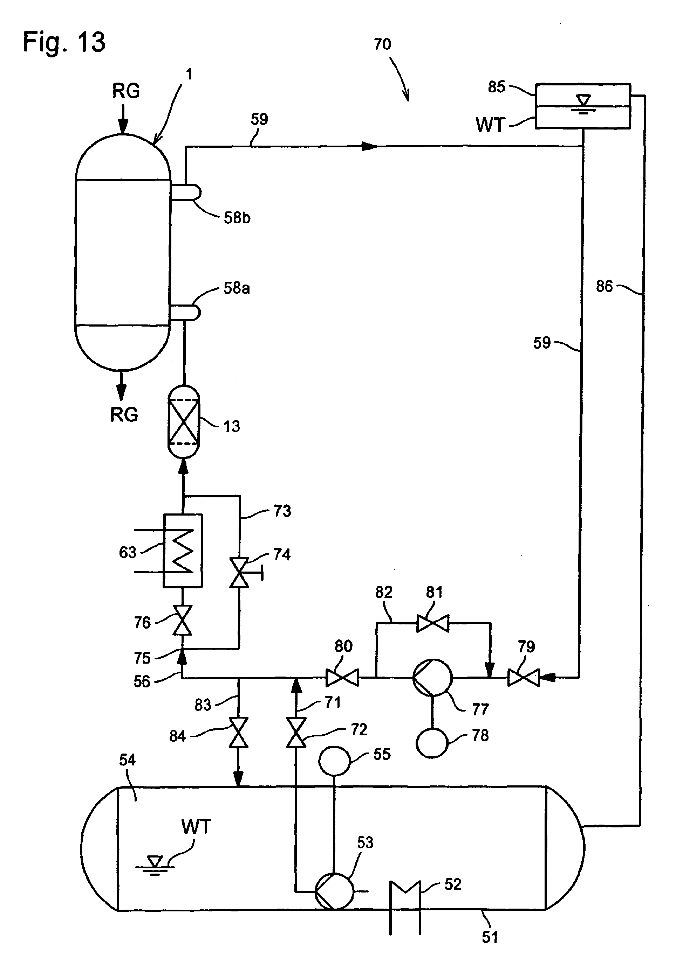

Bei dem in Figur 13 dargestellten Ausführungsbeispiel eines Wärmeträgerkreislaufes 70 strömt der Wärmeträger WT im Normalbetrieb nicht durch den Wärmeträgerbehälter 51.

Wie bei dem Ausführungsbeispiel gemäß Figur 12 befindet sich der Wärmeträger WT vor Aufnahme des Normalbetriebes zunächst im Wärmeträgerbehälter 51. In diesem sind wieder eine Heizung 52 und eine (erste) Pumpe 53 angeordnet, die außerhalb des Wärmeträgerbehälters 51 an eine Energieversorgung bzw. an einen Antriebsmotor 55 angeschlossen sind. Der Wärmeträger WT kann mit Inertgas abgedeckt sein.

Über eine Förderleitung 71 mit einem ersten Ventil 72 wird der Wärmeträger WT von der ersten Pumpe 53 in den Wärmeträgerkreislauf 70 bzw. Hauptstrom gefördert. Dort strömt er über eine Zulaufleitung 56 zunächst zu einem Kühler 63 und danach zu einer Reinigungsvorrichtung 13, die nahe und vorteilhafterweise unmittelbar vor dem Eintritt 58a in den Mikrostrukturreaktor 1 angeordnet ist.

Zum Kühler 63 ist eine Bypassleitung 73 geschaltet, in der ein zweites Ventil 74 angeordnet ist. In Strömungsrichtung vor dem Kühler 63 ist hinter dem Abzweig 75 zur Bypassleitung 73 ein drittes Ventil 76 angeordnet. Der Wärmeträgerstrom wird somit durch das zweite und das dritte Ventil 74, 76 geregelt, die unabhängig voneinander im Kühlerstrom und in der Bypassleitung 73 zum Kühler 63 angeordnet sind.

Vom Austritt 58b aus dem Mikrostrukturreaktor 1 wird der Wärmeträger WT über eine Rücklaufleitung 59 zu einer im Hauptstrom bzw. im Wärmeträgerkreislauf 70 angeordneten zweiten Pumpe 77 geführt, die von einem Motor 78 angetrieben wird und deren Fördermenge mit eigenen Ventilen bzw. Drosseleinrichtungen 79, 80, 81 im Hauptstrom und/oder in einer Bypassleitung 82 zu ihr geregelt wird. Die zweite Pumpe 77 fördert den Wärmeträger WT wieder zum Kühler.

Wenn der Wärmeträgerkreislauf 70 vollständig gefüllt ist, wird das erste Ventil 72 geschlossen.

Der Vorteil dieses Wärmeträgerkreislaufes 70 bzw. dieser Regelung liegt in einer schnelleren Veränderbarkeit der Wärmträgertemperatur gegenüber der in Figur 12 gezeigten Anordnung, bei der der gekühlte Wärmeträgerstrom zunächst mit dem im Wärmeträgerbehälter 51 befindlichen Wärmeträger WT gemischt wird, ehe er in den Mikrostrukturreaktor 1 wieder zurückgeführt wird.

Im Wärmeträgerkreislauf 70 befindet sich weiterhin eine in den Wärmeträgerbehälter 51 führende Entleerungsleitung 83, die im dargestellten Beispiel zwischen dem Anschluss der Förderleitung 71 von der im Wärmeträgerbehälter 51 befindlichen ersten Pumpe 53 und dem Kühler 63 angeordnet ist. Sie enthält ein Entleerungsventil 84, das sich bei Außerbetriebnahme des Mikrostrukturreaktors 1 oder im Störungsfall öffnet und den gesamten oberhalb von ihr befindlichen Wärmeträger WT in den Wärmeträgerbehälter 51 entleert.

Das in Figur 13 dargestellte Ausführungsbeispiel verfügt außerdem über ein Ausdehnungsgefäß 85, durch das sich ein Wärmeträger WT mit Temperatur abhängiger Dichte entspannen kann. Das Ausdehnungsgefäß 85 ist durch eine Druckausgleichsleitung 86 gasseitig mit dem Wärmeträgerbehälter 51 verbunden. Auch in dem Ausdehnungsgefäß 85 kann der Wärmeträger WT mit Inertgas abgedeckt sein.

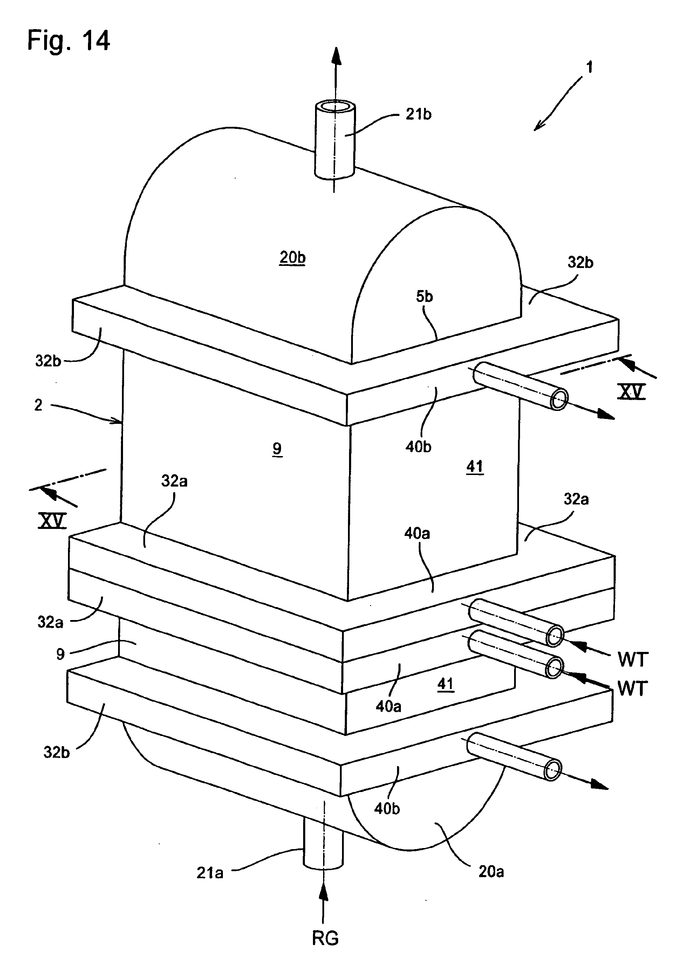

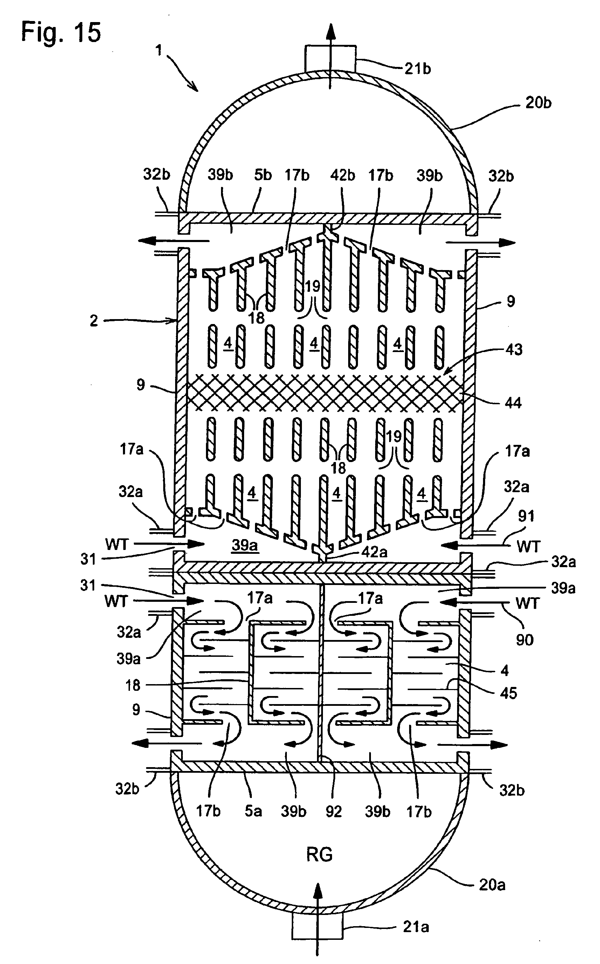

Die Figuren 14 und 15 zeigen ein Ausführungsbeispiel eines erfindungsgemäßen Mikrostrukturreaktors 1, bei dem in Längsrichtung der Reaktionskanäle 3 zwei vollständig voneinander getrennte Wärmeträgerkreisläufe 90, 91 hintereinander angeordnet sind. Die Reaktionskanäle 3 durchlaufen jedoch ungeteilt das Mittelteil 2 von dessen einen Stirnseite 5a zu dessen anderen Stirnseite 5b. Die Zu- und die Abführung des Reaktionsgases RG erfolgt wie bei dem in Figur 4 dargestellten Mikrostrukturreaktor 1 über die Stirnseiten 5a, 5b des Mittelteils 2. Die Strömungsrichtung des Reaktionsgases RG ist dabei in den Figuren von unten nach oben.

Die Ausbildung der Wärmeträgerräume 4 (Figur 15) des in Strömungsrichtung des Reaktionsgases RG ersten Wärmeträgerkreislaufes 90 entspricht in etwa dem Ausführungsbeispiel von Figur 9, jedoch in zur Längsachse symmetrischer Ausführung, wobei der Wärmeträger WT wie in Figur 10 von beiden Längsseiten 9 des Mittelteils 2 zugeführt wird und in der Längs- bzw. Symmetrieachse ein flüssigkeitsdichtes Schott 92 angeordnet ist. Der Wärmeträger WT strömt in diesem ersten Wärmeträgerkreislauf 90 entgegen der Strömungsrichtung des Reaktionsgases RG.

Die Wärmeträgerräume 4 des in Strömungsrichtung des Reaktionsgases RG zweiten Wärmeträgerkreislaufes 91 sind entsprechend dem in Figur 8 dargestellten Ausführungsbeispiel ausgebildet. Der Wärmeträger WT wird in diesem zweiten Wärmeträgerkreislauf 91 im Gleichstrom mit dem Reaktionsgas RG geführt.

Bei allen erfindungsgemäßen Mikrostrukturreaktoren 1 unterliegen die Strömungsführung des Wärmeträgers WT in den Wärmeträgerräumen 4 sowie relativ zur Strömungsrichtung des Reaktionsgases RG, die Ausbildung und Anordnung der Wärmeträgerräume 4 sowie die Anzahl, Ausbildung und Anordnung der Wärmeträgerkreisläufe 50, 70, 90, 91 keinerlei Beschränkungen. So können die Querschnitte der Wärmeträgerräume 4 in deren Längsrichtung auch veränderlich sein. Denkbar ist ferner, dass die Druckeinstelleinrichtungen 16 durch die Formgebung der Wärmeträgerräume 4 selbst gebildet sind oder dass die Wärmeträgerräume 4 zueinander unterschiedliche Strömungsquerschnitte aufweisen.

Wesentlich ist lediglich, dass jedem einzelnen Wärmeträgerraum 4 wenigstens eine Druckeinstelleinrichtung 16 zugeordnet ist, mit der in diesem Wärmeträgerraum 4 eine solche Druckdifferenz zwischen Ein- und Austritt 17a, 17b des Wärmeträgers WT eingestellt werden kann, dass in diesem Wärmeträgerraum 4 ein vorgegebenes Verhältnis des Wärmestroms, der aus den an ihn angrenzenden Reaktionskanälen 3 in ihn hineinströmt oder aus ihm in diese Reaktionskanäle 3 herausströmt, zum Volumenstrom des Wärmeträgers WT vorhanden ist. Auf diese Weise ist es möglich, für jeden Wärmeträgerraum 4 eines Wärmeträgerkreislaufes 50, 70, 90, 91 das gleiche Verhältnis vorzugeben und so in jeder Querschnittsebene durch den Mikrostrukturreaktor 1 senkrecht zur Strömungsrichtung des Reaktionsgases RG eine äußerst homogene Temperaturverteilung, d. h. äußerst geringe Temperaturdifferenzen ΔTₛ zu erzielen.

## Patentansprüche

1. Mikrostrukturreaktor zur Durchführung exothermer oder endothermer Gasphasenprozesse, die bei Temperaturen von mindestens 220°C ablaufen, mit einer Vielzahl zueinander paralleler Reaktionskanäle, durch die hindurch mindestens ein Reaktionsgas strömt und in denen mindestens eine chemische Reaktion stattfindet, und mit einer Vielzahl Wärmeträgerräume, die jeweils durch wärmeübertragende Trennwände von den Reaktionskanälen getrennt sind, wobei an jeden Reaktionskanal wenigstens ein Wärmeträgerraum angrenzt, und in denen ein Wärmeträger im wesentlichen längs der Reaktionskanäle strömt, wobei der Wärmeträger in mindestens einem Wärmeträgerkreislauf umläuft und mit Druck den Wärmeträgerräumen zugeführt wird, und mit einer Vielzahl Druck beeinflussender Einrichtungen, **dadurch gekennzeichnet,**
**dass** in jedem Wärmeträgerkreislauf (50, 70, 90, 91) eine Vielzahl von Druckeinstelleinrichtungen (16) vorhanden ist, die dazu eingerichtet sind, dass der gesamte die Wärmeträgerräume (4) durchströmende Wärmeträger (WT) die Druckeinstelleinrichtungen (16) durchströmt, und wobei die Druckeinstelleinrichtungen (16) konstruktiv festgelegt sind und jedem Wärmeträgerraum (4) mindestens eine Druckeinstelleinrichtung (16) zugeordnet ist, die dazu eingerichtet ist, dass in dem jeweiligen Wärmeträgerraum (4) im Betrieb eine individuelle Druckdifferenz vorhanden ist, bei denen in allen Wärmeträgerräumen (4) eines Wärmeträgerkreislaufes (50, 70, 90, 91) das Verhältnis des Wärmestroms, der zwischen dem Wärmeträgerraum (4) und allen an ihn angrenzenden Reaktionskanälen (3) strömt, zum Volumenstrom des Wärmeträgers (WT) im wesentlichen gleich ist.

2. Mikrostrukturreaktor nach Anspruch 1, **dadurch gekennzeichnet, dass** zwei oder mehr voneinander getrennte Wärmeträgerkreisläufe (90, 91) in Strömungsrichtung des Reaktionsgases (RG) hintereinander angeordnet sind.

3. Mikrostrukturreaktor nach einem der Ansprüche 1 bis 2, **dadurch gekennzeichnet, dass** mindestens ein Wärmeträgerkreislauf (91) dazu eingerichtet ist, den Wärmeträger (WT) im Gleichstrom zum Reaktionsgas (RG) zu führen.

4. Mikrostrukturreaktor nach einem der Ansprüche 1 bis 2, **dadurch gekennzeichnet, dass** mindestens ein Wärmeträgerkreislauf (50, 70, 90) dazu eingerichtet ist, den Wärmeträger (WT) im Gegenstrom zum Reaktionsgas (RG) zu führen.

5. Mikrostrukturreaktor nach einem der Ansprüche 1 bis 4, **dadurch gekennzeichnet, dass** der Wärmeträger (WT) in parallel zu den Reaktionskanälen (3) verlaufenden Wärmeträgerkanälen (4) geführt ist.

6. Mikrostrukturreaktor nach Anspruch 5, **dadurch gekennzeichnet, dass** die Wärmeträgerräume (4) als parallel zu den Reaktionskanälen (3) r verlaufende Wärmeträgerkanäle ausgebildet sind.

7. Mikrostrukturreaktor nach Anspruch 5 oder 6, **dadurch gekennzeichnet, dass** die Wärmeträgerkanäle (4) in ihrer Längsrichtung konstruktiv festgelegte, sich verändernde Querschnitte aufweisen.

8. Mikrostrukturreaktor nach einem der Ansprüche 5 bis 7, **dadurch gekennzeichnet, dass** Wärmeträgerkanäle (4) miteinander in Strömungsverbindung stehen.

9. Mikrostrukturreaktor nach Anspruch 8, **dadurch gekennzeichnet, dass** Bereiche (43) zur Quervermischung des Wärmeträgers (WT) der einzelnen Wärmeträgerkanäle (4) angeordnet sind.

10. Mikrostrukturreaktor nach Anspruch 9, **dadurch gekennzeichnet, dass** in den Bereichen (43) zur Quervermischung Mischeinrichtungen (44) angeordnet sind.

11. Mikrostrukturreaktor nach einem der Ansprüche 1 bis 10, **dadurch gekennzeichnet, dass** die Druckeinstelleinrichtungen (16) als Drosselstellen ausgebildet sind, die jeweils am Ein- und/oder am Austritt (17a, 17b) und/oder an einer beliebigen Stelle entlang der Wärmeträgerräume (4) angeordnet und/oder diesen vor- und/oder nachgeschaltet sind.

12. Mikrostrukturreaktor nach einem der Ansprüche 1 bis 11, **dadurch gekennzeichnet dass** seitlich an die Wärmeträgerräume (4) Verteilerquerkanäle (39a) zur Zuund/oder Abführung des Wärmeträgers (WT) angeschlossen sind.

13. Mikrostrukturreaktor nach einem der Ansprüche 1 bis 12, **dadurch gekennzeichnet dass** der Eintritt für den Wärmeträger (WT) zum ersten Wärmeträgerkreislauf und/oder der Austritt für den Wärmeträger (WT) aus dem letzen Wärmeträgerkreislauf stirnseitig an den Wärmeträgerräumen (4) angeordnet sind.

14. Mikrostrukturreaktor nach einem der Ansprüche 1 bis 13, **dadurch gekennzeichnet, dass** die Druckeinstelleinrichtungen (16) durch die Formgebung der Wärmeträgerräume (4) selbst gebildet sind, indem diese eine jeweils vorgegebene Druckdifferenz zwischen ihrem Eintritt (17a) und Austritt (17b) bewirken.

15. Mikrostrukturreaktor nach Anspruch 14, **dadurch gekennzeichnet, dass** die Wärmeträgerräume (4) zueinander unterschiedliche Strömungsquerschnitte aufweisen.

16. Mikrostrukturreaktor nach einem der Ansprüche 14 oder 15, **dadurch gekennzeichnet, dass** die Wärmeträgerräume (4) zueinander unterschiedlich lange Strömungswege aufweisen.

17. Mikrostrukturreaktor nach einem der Ansprüche 1 bis 16, **dadurch gekennzeichnet, dass** die vom Wärmeträger (WT) angeströmten Oberflächen der Trennwände (10) eine Strukturierung zur Erhöhung des Wärmeübergangs aufweisen.

18. Mikrostrukturreaktor nach einem der Ansprüche 1 bis 17, **dadurch gekennzeichnet, dass** in den Wärmeträgerräumen (4) Einbauten (47) zur Erhöhung des Wärmeübergangs angeordnet sind.

19. Mikrostrukturreaktor nach einem der Ansprüche 1 bis 18, **dadurch gekennzeichnet, dass** in jedem Wärmeträgerkreislauf (50, 70, 90, 91) eine Vorrichtung (13) zur Reinigung des Wärmeträgers (WT) angeordnet ist.

20. Mikrostrukturreaktor nach Anspruch 19, **dadurch gekennzeichnet, dass** in jedem Wärmeträgerkreislauf (50, 70, 90, 91) die Vorrichtung (13) zur Reinigung des Wärmeträgers (WT) unmittelbar vor Eintritt (58a) des Wärmeträgers (WT) in den Mikrostrukturreaktor (1) angeordnet ist.

21. Mikrostrukturreaktor nach Anspruch 19 oder 20, **dadurch gekennzeichnet, dass** die Vorrichtung (13) zur Reinigung des Wärmeträgers (WT) ein Partikelfilter ist.

22. Mikrostrukturreaktor nach einem der Ansprüche 1 bis 21, **dadurch gekennzeichnet, dass** jeder Wärmeträgerkreislauf (50, 70, 90, 91) eine Vorrichtung zur Einstellung der Wärmeträgerumwälzmenge aufweist.

23. Mikrostrukturreaktor nach einem der Ansprüche 1 bis 22, **dadurch gekennzeichnet, dass** jeder Wärmeträgerkreislauf (50,70,90,91) eine Leitung (65,60,83) aufweist über die bei einer Unterbrechung eines Wärmeträgerkreislaufes (50, 70, 90, 91) die zugehörigen Wärmeträgerräume (4) vollständig entleerbar sind.

24. Mikrostrukturreaktor nach Anspruch 23, **dadurch gekennzeichnet, dass** die Wärmeträgerräume (4) dazu eingerichtet sind, sich selbständig zu entleeren.

25. Mikrostrukturreaktor nach einem der Ansprüche 1 bis 24, **dadurch gekennzeichnet, dass** die kleinste lichte Weite der Wärmeträgerräume (4) mindestens 1 mm beträgt.

26. Mikrostrukturreaktor nach einem der Ansprüche 1 bis 25, **dadurch gekennzeichnet, dass** die Trennwände (10) aus Werkstoffen ausgeführt sind, die eine möglichst geringe Foulingneigung aus der Bildung von Oxidschichten aufweisen.

27. Verfahren zum Betreiben eines Mikrostrukturreaktors nach einem der Ansprüche 1 bis 26, wobei der Wärmeträger in mindestens einem Wärmeträgerkreislauf umläuft und mit Druck den Wärmeträgerräumen zugeführt wird, **dadurch gekennzeichnet, dass** der gesamte die Wärmeträgerräume (4) durchströmende Wärmeträger (WT) die Druckeinstelleinrichtungen (16) durchströmt und mit der jedem Wärmeträgerraum zugeordneten (4) mindestens einen Druckeinstelleinrichtung (16) eine Druckdifferenz zwischen Eintritt (17a) und Austritt (17b) des Wärmeträgers (WT) in den bzw. aus dem Wärmeträgerraum (4) in Abhängigkeit von dem Wärmestrom, der zwischen dem Wärmeträgerraum (4) und allen an ihn angrenzenden Reaktionskanälen (3) strömt, jeweils individuell so eingestellt wird, dass in allen Wärmeträgerräumen (4) eines Wärmeträgerkreislaufes (50, 70, 90, 91) das Verhältnis des besagten Wärmestroms zum Volumenstrom des Wärmeträgers (WT) im wesentlichen gleich ist.

28. Mikrostrukturreaktor nach Anspruch 27, **dadurch gekennzeichnet, dass** der Wärmeträger (WT) ein Öl ist.

29. Mikrostrukturreaktor nach Anspruch 27, **dadurch gekennzeichnet, dass** der Wärmeträger (WT) eine ionische Flüssigkeit ist.

30. Mikrostrukturreaktor nach Anspruch 27, **dadurch gekennzeichnet, dass** der Wärmeträger (WT) eine flüssige Salzschmelze ist.

31. Mikrostrukturreaktor nach einem der Ansprüche 27 bis 30, **dadurch gekennzeichnet, dass** die senkrechte Temperaturdifferenz ΔTₛ senkrecht durch die Trennwände (10) in jeder zu den Reaktionskanälen (3) senkrechten Ebene kleiner als 10°C, bevorzugt kleiner als 5°C und besonders bevorzugt kleiner als 2°C ist.

32. Verfahren nach einem der Ansprüche 27 bis 31, **dadurch gekennzeichnet, dass** der Mikrostrukturreaktor (1) bei seiner Inbetriebnahme mit Wärmeträger (WT) befüllt wird und vor dem Befüllen vorgewärmt wird.

33. Verfahren nach Anspruch 32, **dadurch gekennzeichnet, dass** bei der Außerbetriebnahme des Mikrostrukturreaktors (1) die Wärmeträgerräume (4) entleert werden.

34. Verfahren nach Anspruch 33, **dadurch gekennzeichnet, dass** die entleerten Wärmeträgerräume (4) mit Inertgas gefüllt werden.

## Claims

1. Microstructure reactor for carrying out exothermal or endothermal gas phase processes which take place at temperatures of at least 220°C, with a multiplicity of mutually parallel reaction ducts, through which at least one reaction gas flows and in which at least one chemical reaction takes place, and with a multiplicity of heat transfer spaces which are separated from the reaction ducts in each case by means of heat-transmitting partitions, at least one heat transfer space adjoining each reaction duct, and in which a heat transfer medium flows essentially along the reaction ducts, the heat transfer medium circulating at least one heat transfer circuit and being supplied with pressure to the heat transfer spaces, and with a multiplicity of pressure-influencing devices, **characterized in that**, in each heat transfer circuit (50, 70, 90, 91), a multiplicity of pressure-setting devices (16) are present, which are set up in such a way that the entire heat transfer medium (WT) flowing through the heat transfer spaces (4) flows through the pressure-setting devices (16), the pressure-setting devices (16) being structurally fixed, and each heat transfer space (4) being assigned at least one pressure-setting device (16) which is set up in such a way that, during operation, in the respective heat transfer space (4), an individual pressure difference is present, in which, in all the heat transfer spaces (4) of a heat transfer circuit (50, 70, 90, 91), the ratio of the heat flow which flows between the heat transfer space (4) and all the reaction ducts (3) adjoined to it to the volume flow of the heat transfer medium (WT) is essentially identical.

2. Microstructure reactor according to Claim 1, **characterized in that** two or more heat transfer circuits (90, 91), separate from one another are arranged one behind the other in the direction of flow of the reaction gas (RG).

3. Microstructure reactor according to either one of Claims 1 and 2, **characterized in that** at least one heat transfer circuit (91) is set up for carrying the heat transfer medium (WT) in co-current with the reaction gas (RG).

4. Microstructure reactor according to either one of Claims 1 and 2, **characterized in that** at least one heat transfer circuit (50, 70, 90) is set up for carrying the heat transfer medium (WT) in countercurrent to the reaction gas (RG).

5. Microstructure reactor according to one of Claims 1 to 4, **characterized in that** the heat transfer medium (WT) is carried in heat transfer ducts (4) running parallel to the reaction ducts (3).

6. Microstructure reactor according to Claim 5, **characterized in that** the heat transfer spaces (4) are designed as heat transfer ducts running parallel to the reaction ducts (3).

7. Microstructure reactor according to Claim 5 or 6, **characterized in that** the heat transfer ducts (4) have varying cross sections structurally fixed in their longitudinal direction.

8. Microstructure reactor according to one of Claims 5 to 7, **characterized in that** the heat transfer ducts (4) are flow-connected to one another.

9. Microstructure reactor according to Claim 8, **characterized in that** regions (43) for the cross mixing of the heat transfer medium (WT) of the individual heat transfer ducts (4) are arranged.

10. Microstructure reactor according to Claim 9, **characterized in that** mixing devices (44) are arranged in the cross-mixing regions (43).

11. Microstructure reactor according to one of Claims 1 to 10, **characterized in that** the pressure-setting devices (16) are designed as throttle points which in each case are arranged at the inlet and/or at the outlet (17a, 17b) and/or at any desired point along the heat transfer spaces (4) and/or precede and/or follow these.

12. Microstructure reactor according to one of Claims 1 to 11, **characterized in that** transverse distributor ducts (39a) for the supply and/or discharge of the heat transfer medium (WT) are connected laterally to the heat transfer spaces (4).

13. Microstructure reactor according to one of Claims 1 to 12, **characterized in that** the inlet for the heat transfer medium (WT) to the first heat transfer circuit and/or the outlet for the heat transfer medium (WT) from the last heat transfer circuit is arranged on the end face of the heat transfer spaces (4).

14. Microstructure reactor according to one of Claims 1 to 13, **characterized in that** the pressure-setting devices (16) are formed by the shape of the heat transfer spaces (4) themselves, **in that** these give rise in each case to a predetermined pressure difference between their inlet (17a) and outlet (17b).

15. Microstructure reactor according to Claim 14, **characterized in that** the heat transfer spaces (4) have flow cross sections different from one another.

16. Microstructure reactor according to either one of Claims 14 and 15, **characterized in that** the heat transfer spaces (4) have flow paths with a different length with respect to one another.

17. Microstructure reactor according to one of Claims 1 to 16, **characterized in that** those surfaces of the partitions (10) onto which the heat transfer medium (WT) flows have a structuring in order to increase the heat transfer.

18. Microstructure reactor according to one of Claims 1 to 17, **characterized in that** fittings (47) for increasing the heat transfer are arranged in the heat transfer spaces (4).

19. Microstructure reactor according to one of Claims 1 to 18, **characterized in that** a device (13) for purifying the heat transfer medium (WT) is arranged in each heat transfer circuit (50, 70, 90, 91).

20. Microstructure reactor according to Claim 19, **characterized in that**, in each heat transfer circuit (50, 70, 90, 91), the device (13) for purifying the heat transfer medium (WT) is arranged directly upstream of the inlet (58a) of the heat transfer medium (WT) into the microstructure reactor (1).

21. Microstructure reactor according to Claim 19 or 20, **characterized in that** the device (13) for purifying the heat transfer medium (WT) is a particle filter.

22. Microstructure reactor according to one of Claims 1 to 21, **characterized in that** each heat transfer circuit (50, 70, 90, 91) has a device for setting the heat transfer medium circulation quantity.

23. Microstructure reactor according to one of Claims 1 to 22, **characterized in that** each heat transfer circuit (50, 70, 90, 91) has a line (65, 60, 83), via which, in the event of an interruption in a heat transfer circuit (50, 70, 90, 91), the associated heat transfer spaces (4) can be emptied completely.

24. Microstructure reactor according to Claim 23, **characterized in that** the heat transfer spaces (4) are set up to be emptied automatically.

25. Microstructure reactor according to one of Claims 1 to 24, **characterized in that** the smallest clear width of the heat transfer spaces (4) amounts to at least 1 mm.

26. Microstructure reactor according to one of Claims 1 to 25, **characterized in that** the partitions (10) are produced from materials which have as low a tendency as possible to fouling due to the formation of oxide layers.

27. Method for operating a microstructure reactor according to one of Claims 1 to 26, the heat transfer medium circulating at least one heat transfer circuit and being supplied with pressure to the heat transfer spaces, **characterized in that** the entire heat transfer medium (WT) flowing through the heat transfer spaces (4) flows through the pressure-setting devices (16), and, by means of the at least one pressure-setting device (16) assigned to each heat transfer space (4), a pressure difference is set, in each case individually, between the inlet (17a) and outlet (17b) of the heat transfer medium (WT) respectively into and from the heat transfer space (4) as a function of the heat flow which flows between the heat transfer space (4) and all the reaction ducts (3) adjoining it, such that, in all the heat transfer spaces (4) of a heat transfer circuit (50, 70, 90, 91), the ratio of the said heat flow to the volume flow of the heat transfer medium (WT) is essentially identical.

28. Microstructure reactor according to Claim 27, **characterized in that** the heat transfer medium (WT) is an oil.

29. Microstructure reactor according to Claim 27, **characterized in that** the heat transfer medium (WT) is an ionic fluid.

30. Microstructure reactor according to Claim 27, **characterized in that** the heat transfer medium (WT) is a liquid molten salt.

31. Microstructure reactor according to one of Claims 27 to 30, **characterized in that** the vertical temperature difference ΔTₛ perpendicularly through the partitions (10) in each plane perpendicular to the reaction ducts (3) is lower than 10°C, preferably lower than 5°C, and particularly preferably lower than 2°C.

32. Method according to one of Claims 27 to 31, **characterized in that** the microstructure reactor (1), when put into operation, is filled with heat transfer medium (WT) and is preheated before filling.

33. Method according to Claim 32, **characterized in that,** when the microstructure reactor (1) is put out of operation, the heat transfer spaces (4) are emptied.

34. Method according to Claim 33, **characterized in that** the emptied heat transfer spaces (4) are filled with inert gas.

## Revendications

1. Réacteur à microstructure pour la réalisation de réactions exothermiques ou endothermiques en phase gazeuse, qui se déroulent à des températures d'au moins 220 °C, comprenant une pluralité de canaux de réaction parallèles les uns aux autres, à travers lesquels s'écoule au moins un gaz de réaction et dans lesquels au moins une réaction chimique a lieu, et comprenant une pluralité d'espaces caloporteurs, qui sont respectivement séparés des canaux de réaction par des parois de séparation transmettant la chaleur, au moins un espace caloporteur étant adjacent à chaque canal de réaction, et dans lesquels un agent caloporteur s'écoule essentiellement le long des canaux de réaction, l'agent caloporteur circulant dans au moins un circuit caloporteur et étant conduit aux espaces caloporteurs avec une certaine pression, et comprenant une pluralité de dispositifs influant sur la pression, **caractérisé en ce que,**
dans chaque circuit caloporteur (50, 70, 90, 91) se trouve une pluralité de dispositifs de réglage de la pression (16), qui sont agencés de manière à ce que la totalité de l'agent caloporteur (WT) s'écoulant à travers les espaces caloporteurs (4) traverse les dispositifs de réglage de la pression (16), les dispositifs de réglage de la pression (16) étant fixés structurellement, et chaque espace caloporteur (4) étant associé à au moins un dispositif de réglage de la pression (16), qui est agencé de manière à ce que dans l'espace caloporteur respectif (4), pendant le fonctionnement, un différentiel de pression soit présent, dans lesquels dans tous les espaces caloporteurs (4) d'un circuit caloporteur (50, 70, 90, 91), le rapport du flux de chaleur, qui s'écoule entre l'espace caloporteur (4) et tous les canaux de réaction (3) adjacents à celui-ci, est essentiellement égal au débit volumétrique de l'agent caloporteur (WT).

2. Réacteur à microstructure selon la revendication 1, **caractérisé en ce que** deux circuits caloporteurs (90, 91) ou plus séparés l'un de l'autre sont disposés l'un après l'autre dans la direction d'écoulement du gaz de réaction (RG).

3. Réacteur à microstructure selon l'une quelconque des revendications 1 et 2, **caractérisé en ce qu'**au moins un circuit caloporteur (91) est agencé de manière à conduire l'agent caloporteur (WT) en courant continu vers le gaz de réaction (RG).

4. Réacteur à microstructure selon l'une quelconque des revendications 1 et 2, **caractérisé en ce qu'**au moins un circuit caloporteur (50, 70, 90) est agencé de manière à conduire l'agent caloporteur (WT) à contre-courant vers le gaz de réaction (RG).

5. Réacteur à microstructure selon l'une quelconque des revendications 1 à 4, **caractérisé en ce** l'agent caloporteur (WT) est conduit dans des canaux caloporteurs (4) s'étendant parallèlement par rapport aux canaux de réaction (3).

6. Réacteur à microstructure selon la revendication 5, **caractérisé en ce que** les espaces caloporteurs (4) sont réalisés en tant que canaux caloporteurs s'étendant parallèlement par rapport aux canaux de réaction (3).

7. Réacteur à microstructure selon la revendication 5 ou 6, **caractérisé en ce que** les canaux caloporteurs (4) présentent dans leur direction longitudinale des sections transversales variables, fixées structurellement.

8. Réacteur à microstructure selon l'une quelconque des revendications 5 à 7, **caractérisé en ce que** les canaux caloporteurs (4) sont en communication de fluide les uns avec les autres.

9. Réacteur à microstructure selon la revendication 8, **caractérisé en ce que** des zones (43) sont disposées de manière à assurer un brassage de l'agent caloporteur (WT) des canaux caloporteurs individuels (4).

10. Réacteur à microstructure selon la revendication 9, **caractérisé en ce que** des dispositifs de mélange (44) sont disposés dans les zones (43) pour assurer le brassage.

11. Réacteur à microstructure selon l'une quelconque des revendications 1 à 10, **caractérisé en ce que** les dispositifs de réglage de la pression (16) sont réalisés en tant que points d'étranglement, qui sont respectivement disposés sur l'entrée et/ou la sortie (17a, 17b) et/ou à un emplacement quelconque le long des espaces caloporteurs (4) et/ou sont montés en amont et/ou en aval de ces derniers.

12. Réacteur à microstructure selon l'une quelconque des revendications 1 à 11, **caractérisé en ce que** des canaux de distribution transversaux (39a) sont raccordés latéralement aux espaces caloporteurs (4) pour l'amenée et/ou l'évacuation de l'agent caloporteur (WT).

13. Réacteur à microstructure selon l'une quelconque des revendications 1 à 12, **caractérisé en ce que** l'entrée pour l'agent caloporteur (WT) vers le premier circuit caloporteur et/ou la sortie pour l'agent caloporteur (WT) depuis le dernier circuit caloporteur sont disposées de manière frontale sur les espaces caloporteurs (4).

14. Réacteur à microstructure selon l'une quelconque des revendications 1 à 13, **caractérisé en ce que** les dispositifs de réglage de la pression (16) sont eux-mêmes formés par le formage des espaces caloporteurs (4), tout en provoquant respectivement un différentiel de pression prédéterminé entre leur entrée (17a) et leur sortie (17b).

15. Réacteur à microstructure selon la revendication 14, **caractérisé en ce que** les espaces caloporteurs (4) présentent des sections transversales d'écoulement différentes les unes des autres.

16. Réacteur à microstructure selon l'une quelconque des revendications 14 ou 15, **caractérisé en ce que** les espaces caloporteurs (4) présentent de longs trajets d'écoulement différents les uns des autres.

17. Réacteur à microstructure selon l'une quelconque des revendications 1 à 16, **caractérisé en ce que** les surfaces des parois de séparation (10) balayées par l'agent caloporteur (WT) présentent une structuration pour l'augmentation du transfert de chaleur.

18. Réacteur à microstructure selon l'une quelconque des revendications 1 à 17, **caractérisé en ce que** des éléments encastrés (47) sont disposés dans les espaces caloporteurs (4) pour l'augmentation du transfert de chaleur.

19. Réacteur à microstructure selon l'une quelconque des revendications 1 à 18, **caractérisé en ce qu'**un dispositif (13) pour le nettoyage de l'agent caloporteur (WT) est disposé dans chaque circuit caloporteur (50, 70, 90, 91).

20. Réacteur à microstructure selon la revendication 19, **caractérisé en ce que** le dispositif (13) pour le nettoyage de l'agent caloporteur (WT) est disposé dans chaque circuit caloporteur (50, 70, 90, 91) directement avant l'entrée (58a) de l'agent caloporteur (WT) dans le réacteur à microstructure (1).

21. Réacteur à microstructure selon la revendication 19 ou 20, **caractérisé en ce que** le dispositif (13) pour le nettoyage de l'agent caloporteur (WT) est un filtre à particules.

22. Réacteur à microstructure selon l'une quelconque des revendications 1 à 21, **caractérisé en ce que** chaque circuit caloporteur (50, 70, 90, 97) présente un dispositif pour le réglage de la quantité de circulation de l'agent caloporteur.

23. Réacteur à microstructure selon l'une quelconque des revendications 1 à 22, **caractérisé en ce que** chaque circuit caloporteur (50, 70, 90, 91) présente une conduite (65, 60, 83) par l'intermédiaire de laquelle les espaces caloporteurs (4) associés peuvent être entièrement vidés lors d'une interruption d'un circuit caloporteur (50, 70, 90, 91).

24. Réacteur à microstructure selon la revendication 23, **caractérisé en ce que** les espaces caloporteurs (4) sont agencés de manière à se vider de manière autonome.

25. Réacteur à microstructure selon l'une quelconque des revendications 1 à 24, **caractérisé en ce que** la plus petite largeur intérieure des espaces caloporteurs (4) mesure au moins 1 mm.

26. Réacteur à microstructure selon l'une quelconque des revendications 1 à 25, **caractérisé en ce que** les parois de séparation (10) sont réalisées en matières premières, présentant une tendance à l'encrassement aussi réduite que possible par la formation de couches d'oxyde.

27. Procédé de mise en oeuvre d'un réacteur à microstructure selon l'une quelconque des revendications 1 à 26, l'agent caloporteur circulant dans au moins un circuit caloporteur et étant conduit avec une certaine pression aux espaces caloporteurs, **caractérisé en ce que** la totalité de l'agent caloporteur (WT) s'écoulant à travers les espaces caloporteurs (4) traverse les dispositifs de réglage de la pression (16), et, par l'intermédiaire de l'au moins un dispositif de réglage de la pression (16) associé à chaque espace caloporteur (4), un différentiel de pression entre l'entrée (17a) et la sortie (17b) de l'agent caloporteur (WT) est réglé de manière respectivement individuelle dans et/ou à partir de l'espace caloporteur (4) en fonction du flux de chaleur qui s'écoule entre l'espace caloporteur (4) et tous les canaux de réaction (3) adjacents à celui-ci, de telle sorte que dans tous les espaces caloporteurs (4) d'un circuit caloporteur (50, 70, 90, 91), le rapport du flux de chaleur mentionné soit essentiellement égal au débit volumétrique de l'agent caloporteur (WT).

28. Réacteur à microstructure selon la revendication 27, **caractérisé en ce que** l'agent caloporteur (WT) est une huile.

29. Réacteur à microstructure selon la revendication 27, **caractérisé en ce que** l'agent caloporteur (WT) est un liquide ionique.

30. Réacteur à microstructure selon la revendication 27, **caractérisé en ce que** l'agent caloporteur (WT) est un sel fondu liquide.

31. Réacteur à microstructure selon l'une quelconque des revendications 27 à 30, **caractérisé en ce que** la différence de température verticale ΔTₛ verticale à travers les parois de séparation (10) est, dans chaque plan vertical par rapport aux canaux de réaction (3), inférieure à 10 °C, de préférence inférieure à 5 °C, et de manière particulièrement préférée inférieure à 2 °C.

32. Procédé selon l'une quelconque des revendications 27 à 31, **caractérisé en ce que** le réacteur à microstructure (1) est rempli d'agent caloporteur (WT) lors de sa mise en service et est préchauffé avant le remplissage.

33. Procédé selon la revendication 32, **caractérisé en ce que** les espaces caloporteurs (4) sont vidés lors de la mise hors service du réacteur à microstructure (1).

34. Procédé selon la revendication 33, **caractérisé en ce que** les espaces caloporteurs (4) vidés sont remplis de gaz inerte.
